# EUROPÄISCHE PATENTSCHRIFT

(11) **EP 3 178 733 B1**
(45) Veröffentlichungstag und Bekanntmachung des Hinweises auf die Patenterteilung: **25.09.2019**
(21) Anmeldenummer: 16200043.4
(22) Anmeldetag: 22.11.2016
(51) Int. Cl.: B62L 1/00, B60T 8/17, B60T 8/32, B62L 3/02, B62J 99/00

(54) **RADEINHEIT MIT EINER BREMSSCHEIBE UND EINEM SENSORKRANZ**
WHEEL UNIT WITH DISK BRAKE AND A SENSOR RING
UNITÉ DE ROUE AVEC UN FREIN À DISQUE ET UNE BAGUE CAPTEUR

(30) Priorität: 27.11.2015 DE 102015120657
(43) Veröffentlichungstag der Anmeldung: 14.06.2017
(73) Patentinhaber: Gustav Magenwirth GmbH & Co. KG, 72574 Bad Urach (DE)
(72) Erfinder: Neutsch, Christian, 72764 Reutlingen (DE)
(74) Vertreter: Hoeger, Stellrecht & Partner Patentanwälte mbB

(56) Entgegenhaltungen:
- WO-A1-2014/108235
- CN-A- 104 864 074
- DE-A1- 19 915 215
- DE-A1-102010 038 525
- DE-A1-102014 005 527
- US-A1- 2008 111 342

## Beschreibung

Die Erfindung betrifft eine Radeinheit für ein Fahrrad umfassend eine Nabe und eine Felge, welche um eine Drehachse drehbar beweglich angeordnet ist, wobei die Nabe und die Felge durch Speichen miteinander verbunden sind. Derartige Radeinheiten für Fahrräder sind aus dem Stand der Technik bekannt, beispielsweise aus der DE 10 2014 005 527 A1, die alle Merkmale des Oberbegriffs des Anspruchs 1 offenbart.

Diese Radeinheiten sind für Anforderungen des Fahrrades, welche im Folgenden beispielhaft genannt werden, ausgelegt und insbesondere sind die Radeinheiten für das Fahrrad an ein Fahrrad montierbar.

Das Fahrrad umfasst eine vordere Radeinheit und eine hintere Radeinheit, wobei die Radeinheiten mit einem Rahmen verbunden sind.

Im Zusammenhang mit dieser Offenbarung ist unter einem Fahrrad ein Fahrzeug zu verstehen, welches nur durch die Muskelkraft eines Fahrers angetrieben wird, oder durch die Muskelkraft des Fahrers angetrieben werden kann und einen Zusatzantrieb umfasst, der insbesondere abgasfrei, beispielsweise ohne CO₂-Ausstoß arbeitet, wobei der Zusatzantrieb insbesondere den Antrieb durch die menschliche Muskelkraft ergänzt und/oder, beispielsweise phasenweise, insbesondere bei für den Fahrer anstrengenden Fahrabschnitten, ersetzt.

Der Zusatzantrieb umfasst insbesondere einen elektrischen Antriebsmotor, der vorzugsweise aus einem Stromspeicher oder aus einer Brennstoffzelle mit elektrischer Energie gespeist wird.

Beispielsweise benötigt der Zusatzantrieb und somit insbesondere auch das Fahrrad zum Antrieb keine fossilen Brennstoffe.

Somit umfasst der Begriff Fahrrad im hier verwendeten Sinne insbesondere Fahrräder, die nur durch die Muskelkraft des Fahrers antreibbar sind, sowie Fahrräder, welche beispielsweise durch die Muskelkraft des Fahrers antreibbar sind, mit einem dauernd wirkenden oder zuschaltbaren Zusatzantrieb, beispielsweise E-Bikes und Pedelecs, also elektrisch angetriebene Fahrräder.

Insbesondere erreichen derartige Fahrräder Höchstgeschwindigkeiten von höchstens 100 km/h, beispielsweise von höchstens 80 km/h, insbesondere von höchstens 60 km/h, insbesondere von höchstens 40 km/h.

Damit ist das Fahrrad und somit insbesondere auch die Radeinheit für das Fahrrad in Leichtbauweise für eine derartige Höchstgeschwindigkeit ausgelegt.

Außerdem sind Fahrräder im hier verwendeten Sinne leichte Fahrzeuge mit einem Gewicht beispielsweise von höchstens 100 kg, insbesondere von höchstens 80 kg, in besonders zweckmäßiger Weise von höchstens 50 kg, insbesondere von höchstens 30 kg, so dass die Radeinheit für eine Belastung mit einem derartigen Höchstgewicht plus dem Gewicht des Fahrers ausgelegt ist.

Der Erfindung liegt die Aufgabe zugrunde, eine gattungsgemäße Radeinheit für ein Fahrrad zu verbessern.

Diese Aufgabe wird bei einer erfindungsgemäßen Radeinheit der eingangs genannten Art dadurch gelöst, dass an der Nabe eine Bremsscheibe und ein Sensorkranz, welcher einen Abtastbereich umfasst, angeordnet sind und dass der Abtastbereich zwischen der Bremsscheibe und den Speichen positioniert ist.

Damit ist die Radeinheit mittels der Bremsscheibe bremsbar und die zusätzliche Anordnung des Sensorkranzes an die Radeinheit bietet den Vorteil, dass eine Rolleigenschaft der Radeinheit, insbesondere die Drehgeschwindigkeit, beispielsweise eines Rades der Radeinheit, mittels des Sensorkranzes, insbesondere des Abtastbereiches des Sensorkranzes, detektierbar ist.

Ein weiterer Vorteil der erfindungsgemäßen Radeinheit ist darin zu sehen, dass durch die Anordnung des Abtastbereiches zwischen der Bremsscheibe und den Speichen in günstiger Weise ein Bauraum zwischen der Bremsscheibe und den Speichen ausgenutzt wird und es somit ermöglicht wird an die Radeinheit für Fahrräder zusätzlich den Sensorkranz anzuordnen, obwohl bei gattungsgemäßen Radeinheiten aufgrund ihrer Auslegung für Fahrräder und der daraus resultierenden Anforderungen höchstens in geringem Umfang freier Bauraum vorhanden ist.

Bei der erfindungsgemäßen Radeinheit wird durch die Anordnung des Sensorkranzes zwischen der Bremsscheibe und den Speichen als weiterer Vorteil erreicht, dass die Bremsscheibe gemäß den üblichen Standardisierungen im Fahrradbereich, beispielsweise hinsichtlich deren Positionierung in einer zu der Drehachse axialen Richtung und/oder beispielsweise bezüglich der Erstreckung der Radeinheit in der zu der Drehachse axialen Richtung, an die Radeinheit montierbar ist.

Hinsichtlich der Ausgestaltung der Bremsscheibe wurden bislang keine näheren Angaben gemacht.

Die Bremsscheibe erstreckt sich im Wesentlichen beispielsweise in einer, insbesondere zu einer Bremsscheibenachse senkrecht verlaufenden, Bremsscheibenebene, welche beispielsweise durch einen an die Bremsscheibe angeordneten Bremsring definiert wird.

In vorteilhafter Weise umfasst die Bremsscheibe einen Montagering, mit welchem die Bremsscheibe an die Nabe montierbar ist, und insbesondere definiert der Montagering die Bremsscheibenebene.

Insbesondere tragen Tragestege der Bremsscheibe den Bremsring der Bremsscheibe und in vorteilhafter Weise verbinden die Tragestege den Bremsring mit dem Montagering der Bremsscheibe.

Hinsichtlich der Ausgestaltung der Speichen wurden bislang keine näheren Angaben gemacht.

Insbesondere sind einige der Speichen an einen ersten Ringbund der Nabe befestigt und einige der Speichen an einem zweiten Ringbund der Nabe befestigt, wobei insbesondere an dem ersten Ringbund der Nabe und an dem zweiten Ringbund der Nabe gleich viele Speichen befestigt sind.

Dabei sind die Speichen im Wesentlichen in einer Speichenfläche angeordnet, wobei die Speichenfläche insbesondere sich aus einer ersten Speichenfläche und einer zweiten Speichenfläche zusammensetzt, und die erste Speichenfläche von dem ersten Ringbund der Nabe ausgehend sich in der zu der Drehachse radialen Richtung bis zu der Felge erstreckt und die zweite Speichenfläche ausgehend von dem zweiten Ringbund der Nabe sich in der zu der Drehachse radialen Richtung bis zu der Felge erstreckt und im Bereich der Felge die erste Speichenfläche und die zweite Speichenfläche zusammentreffen.

Dabei sind insbesondere im Bereich der Drehachse die erste Speichenfläche und die zweite Speichenfläche in der zu der Drehachse axialen Richtung voneinander beabstandet und laufen in der zu der Drehachse radialen Richtung aufeinander zu, so dass die erste Speichenfläche und die zweite Speichenfläche konusartig ausgebildet sind.

Hinsichtlich der Anordnung und Ausgestaltung des Sensorkranzes und des Abtastbereiches wurden bislang keine näheren Angaben gemacht.

Bei einer besonders vorteilhaften Ausführungsform ist vorgesehen, dass die Bremsscheibe sich im Wesentlichen in der Bremsscheibenebene erstreckt und die Speichen im Wesentlichen in der Speichenfläche verlaufen, wobei der Abtastbereich, insbesondere in der zu der Drehachse axialen Richtung, zwischen der Bremsscheibenebene und der Speichenfläche angeordnet ist.

Besonders günstig ist es, wenn der Sensorkranz, insbesondere in der zu der Drehachse axialen Richtung, zwischen der Bremsscheibenebene und der Speichenfläche an der Nabe angeordnet ist und somit der dort vorhandene Bauraum in zweckmäßiger Weise ausgenutzt wird.

Außerdem ist dabei in vorteilhafter Weise der Sensorkranz in einem ähnlichen Bereich, insbesondere bezogen auf die zu der Drehachse axialen Richtung, wie der Abtastbereich angeordnet, so dass eine konstruktiv einfache Bauart ermöglicht wird.

In vorteilhafter Weise erstreckt sich der Sensorkranz im Wesentlichen in einer Sensorkranzebene, welche senkrecht zu einer Sensorkranzachse verläuft, wobei unter einem im Wesentlichen in einer Sensorkranzebene erstreckenden Sensorkranz insbesondere zu verstehen ist, dass ein Innenbereich des Sensorkranzes, beispielsweise ein Montagering des Sensorkranzes, sich in der Sensorkranzebene erstreckt und insbesondere ein Großteil des Sensorkranzes sich in der Sensorkranzebene erstreckt.

Dabei ist insbesondere die Sensorkranzachse koaxial zur Drehachse ausgerichtet.

Bei einer vorteilhaften Ausführungsform verläuft der Abtastbereich in der Sensorkranzebene.

Dabei beansprucht der Abtastbereich des Sensorkranzes in vorteilhafter Weise nur einen höchst geringen Bauraum in der zu der Drehachse axialen Richtung und ist somit in günstiger Weise zwischen den Speichen und der Bremsscheibe positionierbar.

Dabei ist in besonders günstiger Weise vorgesehen, dass sich der Abtastbereich im Wesentlichen in der zu der Drehachse radialen Richtung und in eine Umlaufrichtung um die Drehachse herum erstreckt.

Bei einer weiteren, besonders vorteilhaften Ausführungsform ist vorgesehen, dass der Abtastbereich quer zu der Sensorkranzebene verläuft und dabei einen besonders gut detektierbaren Bereich ausbildet.

Beispielsweise ist der Abtastbereich bandartig ausgebildet, wobei in vorteilhafter Weise die breite Seite des bandartigen Abtastbereiches quer, insbesondere im Wesentlichen senkrecht, zu der Sensorkranzebene verläuft und/oder in besonders zweckmäßiger Weise die längliche Ausdehnung des beispielsweise bandartigen Abtastbereiches in die Umlaufrichtung um die Drehachse herum verläuft und/oder in besonders vorteilhafter Weise der Abtastbereich in der zu der Drehachse radialen Richtung seine geringste Erstreckung aufweist.

Bei einer besonders bevorzugten Ausführungsform erhebt sich der Sensorkranz in dem Abtastbereich aus der Sensorkranzebene heraus.

Dabei erhebt sich beispielsweise ein quer zu der Sensorkranzebene verlaufender Teil des Sensorkranzes sich in dem Abtastbereich aus der Sensorkranzebene heraus.

Bei einer besonders günstigen Ausführungsform ist vorgesehen, dass der Sensorkranz in dem Abtastbereich eine Dicke, welche auf die Erstreckung des Sensorkranzes in die zu der Drehachse axialen Richtung bezogen ist, aufweist, welche dicker ist als eine Dicke in dem Innenbereich des Sensorkranzes, welcher relativ zu dem Abtastbereich bezogen auf die Drehachse radial inwärts angeordnet ist.

Damit bildet der Sensorkranz in dem Abtastbereich insbesondere eine größere detektierbare Fläche und/oder bildet eine stärker ausgeprägte Struktur, welche in besonders günstiger Weise detektierbar ist.

In besonders vorteilhafter Weise ist vorgesehen, dass sich der Abtastbereich koaxial zu der Sensorkranzachse erstreckt und sich somit beispielsweise quer zu der Sensorkranzebene verlaufend aus dieser heraus erhebt.

Bei einer weiteren besonders bevorzugten Ausführungsform ist vorgesehen, dass der Sensorkranz in dem Abtastbereich doppellagig ausgebildet ist und so in besonders günstiger Weise eine gut ausgeprägte und somit besonders günstig detektierbare Struktur ausbildet.

Insbesondere ist vorgesehen, dass der Sensorkranz in dem Abtastbereich umgefalzt ist, so dass eine ausgeprägte, gut detektierbare Struktur in konstruktiv einfacher Weise ausgebildet wird.

Bei einer besonders zweckmäßigen Ausführungsform, ist vorgesehen, dass der Sensorkranz in dem Abtastbereich eine entlang der Umlaufrichtung um die Drehachse periodisch variierende Struktur aufweist.

Beispielsweise ist eine Struktur in dem Abtastbereich drehsymmetrisch zu einer Drehung um die Sensorkranzachse bezüglich eines Drehwinkels von maximal 20°, insbesondere von maximal 10°, in besonders günstiger Weise von maximal 5°, in besonders vorteilhafter Weise von maximal 3° ausgebildet. Dabei kann die periodisch variierende Struktur in unterschiedlichster Weise ausgebildet sein.

Beispielsweise ist es denkbar, dass die periodisch variierende Struktur durch eine unterschiedliche Materialzusammensetzung des Sensorkranzes in dem Abtastbereich, wobei die Materialzusammensetzung entsprechend periodisch entlang der Umlaufrichtung um die Drehachse variiert, ausgebildet ist.

Auch ist es denkbar, dass die Materialdichte in dem Abtastbereich entlang der Umlaufrichtung um die Drehachse periodisch variiert und somit eine periodisch variierende Struktur ausgebildet ist.

In besonders vorteilhafter Weise ist vorgesehen, dass eine Materialeigenschaft eines den Sensorkranz in dem Abtastbereich bildenden Materials, beispielsweise eine optische und/oder eine elektronische und/oder eine magnetische Eigenschaft und/oder eine Oberflächeneigenschaft, in dem Abtastbereich entlang der Umlaufrichtung um die Drehachse periodisch variiert, insbesondere periodisch und sprunghaft variiert und somit durch die periodisch variierende Materialeigenschaft die periodisch variierende Struktur ausgebildet ist.

Bei einer besonders bevorzugten Ausführungsform ist vorgesehen, dass die periodisch variierende Struktur in dem Abtastbereich entlang der Umlaufrichtung um die Drehachse periodisch variierend unterschiedlich stark magnetfeldbeeinflussend ausgebildet ist, so dass übliche Beeinträchtigungen bei der Radeinheit für ein Fahrrad, beispielsweise durch Verunreinigungen wie Dreck, die Detektierbarkeit des Sensorkranzes in dem Abtastbereich in kaum merklicher Weise beeinträchtigen.

Bei einer weiteren, besonders vorteilhaften Ausführungsform weist der Sensorkranz in dem Abtastbereich eine entlang der Umlaufrichtung um die Drehachse periodisch gezahnte Struktur auf, wodurch in besonders günstiger Weise und konstruktiv einfach eine periodisch variierende Struktur ausgebildet ist.

Bei einer besonders vorteilhaften Ausführungsform ist vorgesehen, dass die periodisch variierend unterschiedlich stark magnetfeldbeeinflussende Struktur in dem Abtastbereich als periodisch gezahnte Struktur ausgebildet ist, wodurch in konstruktiv einfacher Weise die periodisch variierend unterschiedlich stark magnetfeldbeeinflussende Struktur gebildet ist.

Damit ist in besonders günstiger Weise die periodisch variierende Struktur in dem Abtastbereich detektierbar und somit ebenso die Drehgeschwindigkeit des Abtastbereichs um die Drehachse detektierbar.

Bei einer besonders günstigen Ausführungsform ist die periodisch gezahnte Struktur in dem Abtastbereich durch periodisch entlang der Umlaufrichtung um die Drehachse abwechselnd angeordnete Durchbrüche und Zähne und/oder abwechselnd angeordnete Durchbrüche und Materialbrücken ausgebildet und dadurch ist die periodisch gezahnte Struktur in einfacher Weise ausgebildet.

Beispielsweise sind die Zähne als Materialbrücken ausgebildet.

Insbesondere sind die Zähne und Durchbrüche umfangseitig periodisch entlang der Umlaufrichtung um die Drehachse in dem Abtastbereich angeordnet.

Insbesondere sind die Zähne und Durchbrüche bei der Radeinheit zwischen den Speichen und der Bremsscheibe angeordnet.

Dabei sind unterschiedliche Ausgestaltungen der gezahnten Struktur, insbesondere der Zähne und Durchbrüche, denkbar.

Bei einer besonders günstigen Ausführungsform erstrecken sich die Zähne länglich in der zu der Drehachse radialen Richtung.

In besonders vorteilhafter Weise ist vorgesehen, dass die Zähne sich in der Sensorkranzebene länglich erstrecken.

Bei einer weiteren besonders vorteilhaften Ausführungsform ist vorgesehen, dass die Zähne sich länglich in der zu der Drehachse axialen Richtung erstrecken.

In besonders günstiger Weise ist vorgesehen, dass die Zähne sich quer zu der Sensorkranzebene länglich erstrecken.

Bei einer besonders bevorzugten Ausführungsform ist vorgesehen, dass Haltestege des Sensorkranzes den Abtastbereich des Sensorkranzes an einem Montagering des Sensorkranzes halten.

Damit hat der Sensorkranz eine Stabilität und die Haltestege bieten eine gewisse Flexibilität um Erschütterungen abzufedern und/oder Spannungen in dem Sensorkranz auszugleichen.

Beispielsweise sind genau so viele Haltestege an dem Sensorkranz vorgesehen, wie Tragestege an der Bremsscheibe vorgesehen sind.

Es ist jedoch auch denkbar, dass eine andere gerade Anzahl an Haltestegen oder eine andere ungerade Anzahl an Haltestegen vorgesehen ist.

In einer besonders vorteilhaften Weise ist vorgesehen, dass die Haltestege des Sensorkranzes und die Tragestege der Bremsscheibe sich in der zu der Drehachse axialen Richtung abdecken und somit die Anordnung der Elemente eine zusätzliche Stabilität erhält.

Bei einer besonders günstigen Ausführungsform ist vorgesehen, dass die Radeinheit einen Sensor zum detektieren des Abtastbereiches umfasst.

Dabei kann grundsätzlich jeglicher Sensor vorgesehen sein, welcher eine periodisch variierende Struktur, beispielsweise die gezahnte Struktur, insbesondere periodisch abwechselnd angeordnete Materialbrücken und Durchbrüche erfasst.

Dabei ist es denkbar, dass der Sensor ein optischer Sensor ist, welcher optische Eigenschaften, insbesondere des Sensorkranzes in dem Abtastbereich, detektiert.

Bei einer besonders günstigen Ausführungsform ist vorgesehen, dass der Sensor ein magnetischer Sensor ist, welcher magnetfeldbeeinflussende Strukturen, insbesondere die magnetfeldbeeinflussende Struktur des Abtastbereiches, detektiert.

In vorteilhafter Weise ist vorgesehen, dass der Sensor als Hall-Sensor ausgebildet ist.

Insbesondere ist in vorteilhafter Weise vorgesehen, dass der Sensor die periodisch variierende Struktur, insbesondere die gezahnte Struktur in dem Abtastbereich detektiert.

Bei einer besonders günstigen Ausführungsform detektiert der Sensor den Abtastbereich in der zu der Drehachse radialen Richtung.

Bei einer weiteren besonders vorteilhaften Ausführungsform ist vorgesehen, dass der Sensor den Abtastbereich in der zu der Drehachse axialen Richtung detektiert.

Beispielsweise ist der Sensor zwischen der Bremsscheibe und den Speichen angeordnet, insbesondere ist der Sensor zwischen der Bremsscheibenebene und der Speichenfläche angeordnet.

Bei einer besonders günstigen Ausführungsform ist vorgesehen, dass der Sensor in der zu der Drehachse radialen Richtung versetzt zu dem Abtastbereich angeordnet ist.

Beispielsweise ist der Sensor im Wesentlichen in jener Ebene angeordnet, in welcher die Sensorkranzebene verläuft.

Bei einer weiteren besonders günstigen Ausführungsform ist vorgesehen, dass der Sensor in der zu der Drehachse axialen Richtung versetzt zu dem Abtastbereich angeordnet ist.

Des Weiteren ist in vorteilhafter Weise vorgesehen, dass die Radeinheit eine Bremszange umfasst, wobei die Bremszange und die Bremsscheibe bremsend zusammenwirkbar sind, insbesondere die Bremszange mit dem Bremsring der Bremsscheibe bei einem Bremsvorgang bremsend zusammenwirkt.

In vorteilhafter Weise ist der Sensor an der Bremszange angeordnet, so dass in konstruktiv einfacher Weise der Sensor auf den Abtastbereich des Sensorkranzes ausrichtbar ist und der vorhandene Bauraum in effektiver Weise ausgenutzt wird.

Des Weiteren ist in besonders zweckmäßiger Weise vorgesehen, dass die Radeinheit eine Radaufhängung umfasst, an welcher die Nabe um die Drehachse drehbar beweglich angeordnet ist.

In besonders vorteilhafter Weise ist vorgesehen, dass der Sensor an der Radaufhängung angeordnet ist.

Alternativ oder ergänzend betrifft die Erfindung ein Fahrrad der eingangs genannten Art, wobei mindestens eine der Radeinheiten des Fahrrades eines oder mehrere der voranstehend genannten Merkmale umfasst.

Bei einer besonders günstigen Ausführungsform des Fahrrades ist vorgesehen, dass die vordere Radeinheit eines oder mehrere der voranstehend genannten Merkmale umfasst und dass die hintere Radeinheit eines oder mehrere der voranstehenden Merkmale umfasst.

Insbesondere ist vorgesehen, dass das Fahrrad ein muskelangetriebenes Fahrradantriebssystem umfasst.

Bei einer besonders vorteilhaften Ausführungsform ist vorgesehen, dass das Fahrrad einen Zusatzantrieb umfasst.

Dabei ist insbesondere vorgesehen, dass der Zusatzantrieb einen elektrischen Antriebsmotor umfasst.

Bei einer besonders bevorzugten Ausführungsform ist vorgesehen, dass das Fahrrad ein Antiblockiersystem umfasst, welches eine Steuerungseinheit und eine Druckregulierungseinheit umfasst, wobei die Steuerungseinheit in Abhängigkeit von den Drehgeschwindigkeiten der Räder der vorderen und hinteren Radeinheit die Druckregulierungseinheit ansteuert und die Druckregulierungseinheit den Druck in einem Hydrauliksystem einer Bremsvorrichtung, welche die Bremszange und die Bremsscheibe umfasst, vermindert.

Beispielsweise vermindert die Druckregulierungseinheit den Druck in dem Hydrauliksystem, wenn die Drehgeschwindigkeit des Rades der vorderen Radeinheit verglichen mit der Drehgeschwindigkeit des Rades der hinteren Radeinheit bei einem Bremsvorgang erheblich kleiner ist.

Dabei übermittelt insbesondere der Sensor der vorderen Radeinheit und der Sensor der hinteren Radeinheit die gemessenen Drehgeschwindigkeiten an das Antiblockiersystem.

Die vorstehende Beschreibung erfindungsgemäßer Lösungen umfasst somit insbesondere die durch die nachfolgenden durchnummerierten Ausführungsformen definierten verschiedenen Merkmalskombinationen:
1. Radeinheit (12) für ein Fahrrad (10) umfassend eine Nabe (102) und eine Felge (104), welche um eine Drehachse (114) drehbar beweglich angeordnet ist, wobei die Nabe (102) und die Felge (104) durch Speichen (108) miteinander verbunden sind, dadurch gekennzeichnet, dass an der Nabe (102) eine Bremsscheibe (206) und ein Sensorkranz (612), welcher einen Abtastbereich (616) umfasst, angeordnet sind und dass der Abtastbereich (616) zwischen der Bremsscheibe (206) und den Speichen (108) positioniert ist.
2. Radeinheit (12) nach Ausführungsform 1, dadurch gekennzeichnet, dass Tragestege (286) der Bremsscheibe (206) einen Bremsring (282) der Bremsscheibe (206) tragen.
3. Radeinheit (12) nach einer der voranstehenden Ausführungsformen, dadurch gekennzeichnet, dass die Bremsscheibe (206) sich im Wesentlichen in einer Bremsscheibenebene (252) erstreckt und die Speichen (108) im Wesentlichen in einer Speichenfläche (148) verlaufen, wobei der Abtastbereich (616) zwischen der Bremsscheibenebene (252) und der Speichenfläche (148) angeordnet ist.
4. Radeinheit (12) nach einer der voranstehenden Ausführungsformen, dadurch gekennzeichnet, dass der Sensorkranz (612) zwischen der Bremsscheibenebene (252) und der Speichenfläche (148) an der Nabe (102) angeordnet ist.
5. Radeinheit (12) nach einer der voranstehenden Ausführungsformen, dadurch gekennzeichnet, dass sich der Sensorkranz (612) im Wesentlichen in einer Sensorkranzebene (622), welche senkrecht zu einer Sensorkranzachse (618) verläuft, erstreckt.
6. Radeinheit (12) nach einer der voranstehenden Ausführungsformen, dadurch gekennzeichnet, dass der Abtastbereich (616) in der Sensorkranzebene (622) verläuft.
7. Radeinheit (12) nach einer der voranstehenden Ausführungsformen, dadurch gekennzeichnet, dass der Abtastbereich (616) quer zu der Sensorkranzebene (622) verläuft.
8. Radeinheit (12) nach einer der voranstehenden Ausführungsformen, dadurch gekennzeichnet, dass sich der Sensorkranz (612) in dem Abtastbereich (616) aus der Sensorkranzebene (622) heraus erhebt.
9. Radeinheit (12) nach einer der voranstehenden Ausführungsformen, dadurch gekennzeichnet, dass der Sensorkranz (612) in dem Abtastbereich (616) eine Dicke (662), welche auf die Erstreckung des Sensorkranzes (612) in eine zu der Drehachse (114) axialen Richtung bezogen ist, aufweist, welche dicker ist als eine Dicke (664) in einem Innenbereich (624) des Sensorkranzes (612), welcher relativ zu dem Abtastbereich (616) bezogen auf die Drehachse (114) radial inwärts angeordnet ist.
10. Radeinheit (12) nach einer der voranstehenden Ausführungsformen, dadurch gekennzeichnet, dass der Sensorkranz (612) in dem Abtastbereich (616) umgefalzt ist.
11. Radeinheit (12) nach einer der voranstehenden Ausführungsformen, dadurch gekennzeichnet, dass der Sensorkranz (612) in dem Abtastbereich (616) eine entlang der Umlaufrichtung (116) um die Drehachse (114) periodisch variierende Struktur (648) aufweist.
12. Radeinheit (12) nach einer der voranstehenden Ausführungsformen, dadurch gekennzeichnet, dass die periodisch variierende Struktur (648) in dem Abtastbereich (616) entlang der Umlaufrichtung (116) um die Drehachse (114) periodisch variierend unterschiedlich stark magnetfeldbeeinflussend ausgebildet ist.
13. Radeinheit (12) nach einer der voranstehenden Ausführungsformen, dadurch gekennzeichnet, dass der Sensorkranz (612) in dem Abtastbereich (616) eine entlang der Umlaufrichtung (116) um die Drehachse (114) periodisch gezahnte Struktur aufweist.
14. Radeinheit (12) nach einer der voranstehenden Ausführungsformen, dadurch gekennzeichnet, dass die periodisch variierend unterschiedlich stark magnetfeldbeeinflussende Struktur in dem Abtastbereich (616) als periodisch gezahnte Struktur ausgebildet ist.
15. Radeinheit (12) nach einer der voranstehenden Ausführungsformen, dadurch gekennzeichnet, dass die periodisch gezahnte Struktur in dem Abtastbereich (616) durch periodisch entlang der Umlaufrichtung (116) um die Drehachse (114) abwechselnd angeordnete Durchbrüche (658) und Zähne (652) ausgebildet ist.
16. Radeinheit (12) nach einer der voranstehenden Ausführungsformen, dadurch gekennzeichnet, dass die Zähne (652) sich länglich in einer zu der Drehachse (114) radialen Richtung erstrecken.
17. Radeinheit (12) nach einer der voranstehenden Ausführungsformen, dadurch gekennzeichnet, dass die Zähne (652) sich in der Sensorkranzebene (622) länglich erstrecken.
18. Radeinheit (12) nach einer der voranstehenden Ausführungsformen, dadurch gekennzeichnet, dass Zähne (652) sich länglich in der zu der Drehachse (114) axialen Richtung erstrecken.
19. Radeinheit (12) nach einer der voranstehenden Ausführungsformen, dadurch gekennzeichnet, dass die Zähne (652) sich quer zu der Sensorkranzebene (622) länglich erstrecken.
20. Radeinheit (12) nach einer der voranstehenden Ausführungsformen, dadurch gekennzeichnet, dass Haltestege (644) des Sensorkranzes (612) den Abtastbereich (616) des Sensorkranzes (612) an einem Montagering (634) des Sensorkranzes (612) halten.
21. Radeinheit (12) nach einer der voranstehenden Ausführungsformen, dadurch gekennzeichnet, dass die Haltestege (644) des Sensorkranzes (612) und die Tragestege (286) der Bremsscheibe (206) sich in der zu der Drehachse (114) axialen Richtung abdecken.
22. Radeinheit (12) nach einer der voranstehenden Ausführungsformen, dadurch gekennzeichnet, dass die Radeinheit (12) einen Sensor (614) zum Detektieren des Abtastbereiches (616) umfasst.
23. Radeinheit (12) nach einer der voranstehenden Ausführungsformen, dadurch gekennzeichnet, dass der Sensor (614) die periodisch variierende Struktur in dem Abtastbereich (616) detektiert.
24. Radeinheit (12) nach einer der voranstehenden Ausführungsformen, dadurch gekennzeichnet, dass der Sensor (614) den Abtastbereich (616) in der zu der Drehachse (114) radialen Richtung detektiert.
25. Radeinheit (12) nach einer der voranstehenden Ausführungsformen, dadurch gekennzeichnet, dass der Sensor (614) den Abtastbereich (616) in der zu der Drehachse (114) axialen Richtung detektiert.
26. Radeinheit (12) nach einer der voranstehenden Ausführungsformen, dadurch gekennzeichnet, dass der Sensor (614) zwischen der Bremsscheibe (206) und den Speichen (108) angeordnet ist.
27. Radeinheit (12) nach einer der voranstehenden Ausführungsformen, dadurch gekennzeichnet, dass der Sensor (614) in der zu der Drehachse (114) radialen Richtung versetzt zu dem Abtastbereich (616) angeordnet ist.
28. Radeinheit (12) nach einer der voranstehenden Ausführungsformen, dadurch gekennzeichnet, dass der Sensor (614) in der zu der Drehachse (114) axialen Richtung versetzt zu dem Abtastbereich (616) angeordnet ist.
29. Radeinheit (12) nach einer der voranstehenden Ausführungsformen, dadurch gekennzeichnet, dass die Radeinheit (12) eine Bremszange (204) umfasst, wobei die Bremszange (204) und die Bremsscheibe (206) bremsend zusammenwirkbar sind.
30. Radeinheit (12) nach einer der voranstehenden Ausführungsformen, dadurch gekennzeichnet, dass der Sensor (614) an der Bremszange (604) angeordnet ist.
31. Radeinheit (12) nach einer der voranstehenden Ausführungsformen, dadurch gekennzeichnet, dass die Radeinheit (12) eine Radaufhängung (72) umfasst, an welcher die Nabe (102) um die Drehachse (114) drehbar beweglich angeordnet ist.
32. Radeinheit (12) nach einer der voranstehenden Ausführungsformen, dadurch gekennzeichnet, dass der Sensor (614) an der Radaufhängung (72) angeordnet ist.
33. Fahrrad (10) umfassend eine vordere Radeinheit (12v) und eine hintere Radeinheit (12h), wobei die Radeinheiten (12v, 12h) mit einem Rahmen (14) verbunden sind, dadurch gekennzeichnet, dass mindestens eine der Radeinheiten (12v, 12h) des Fahrrades (10) gemäß einem der voranstehenden Ansprüche ausgebildet ist.
34. Fahrrad (10) nach Ausführungsform 33, dadurch gekennzeichnet, dass die vordere Radeinheit (12v) gemäß einem der Ansprüche 1 bis 32 ausgebildet ist und die hintere Radeinheit (12h) nach einem der Ansprüche 1 bis 32 ausgebildet ist.
35. Fahrrad (10) nach Ausführungsform 33 oder 34, dadurch gekennzeichnet, dass das Fahrrad (10) ein muskelangetriebenes Fahrradantriebssystem (16) umfasst.
36. Fahrrad (10) nach einer der Ausführungsformen 33 bis 35, dadurch gekennzeichnet, dass das Fahrrad (10) einen Zusatzantrieb (902) umfasst.
37. Fahrrad (10) nach Ausführungsform 36, dadurch gekennzeichnet, dass der Zusatzantrieb (902) einen elektrischen Antriebsmotor (912) umfasst.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Seitenansicht eines ersten Ausführungsbeispiels eines erfindungsgemäßen Fahrrades;
- Fig. 2: eine ausschnittsweise Seitenansicht eines ersten Ausführungsbeispiels einer erfindungsgemäßen vorderen Radeinheit;
- Fig. 3: eine ausschnittsweise radiale Ansicht des ersten Ausführungsbeispiels einer erfindungsgemäßen vorderen Radeinheit;
- Fig. 4: einen Schnitt IV-IV gemäß Fig. 2;
- Fig. 5: eine ausschnittsweise Seitenansicht eines ersten Ausführungsbeispiels einer erfindungsgemäßen hinteren Radeinheit;
- Fig. 6: eine ausschnittsweise radiale Ansicht des ersten Ausführungsbeispiels einer erfindungsgemäßen hinteren Radeinheit;
- Fig. 7: einen Schnitt VII-VII gemäß Fig. 5;
- Fig. 8: eine perspektivische Darstellung eines Ausführungsbeispiels einer erfindungsgemäßen Nabe;

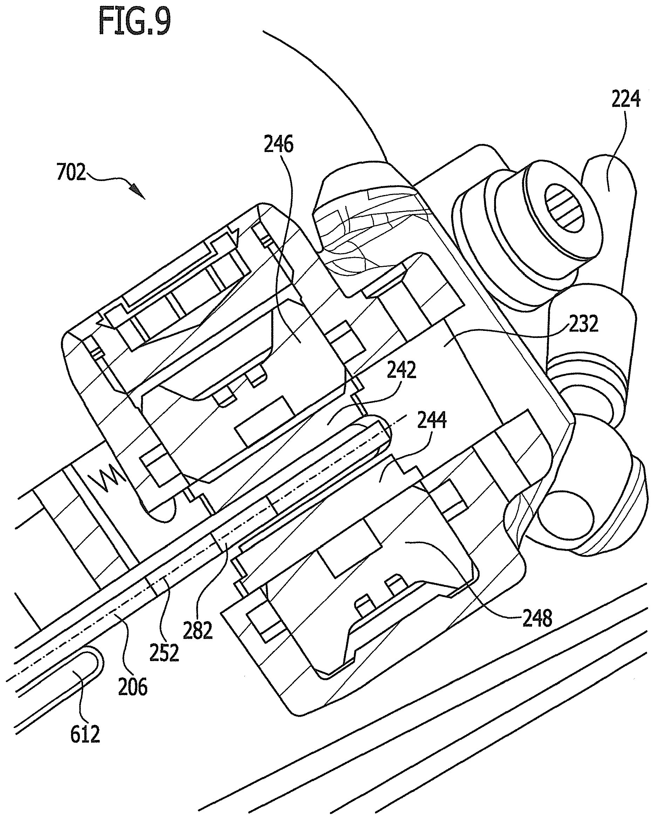

- Fig. 9: einen Schnitt IX-IX gemäß Fig. 2 in einem Bereich eines Ausführungsbeispiels einer erfindungsgemäßen Bremszange;
- Fig. 10: eine Seitenansicht eines Ausführungsbeispiels einer erfindungsgemäßen Bremsscheibe;
- Fig. 11: eine perspektivische Darstellung eines ersten Ausführungsbeispiels eines erfindungsgemäßen Sensorkranzes;

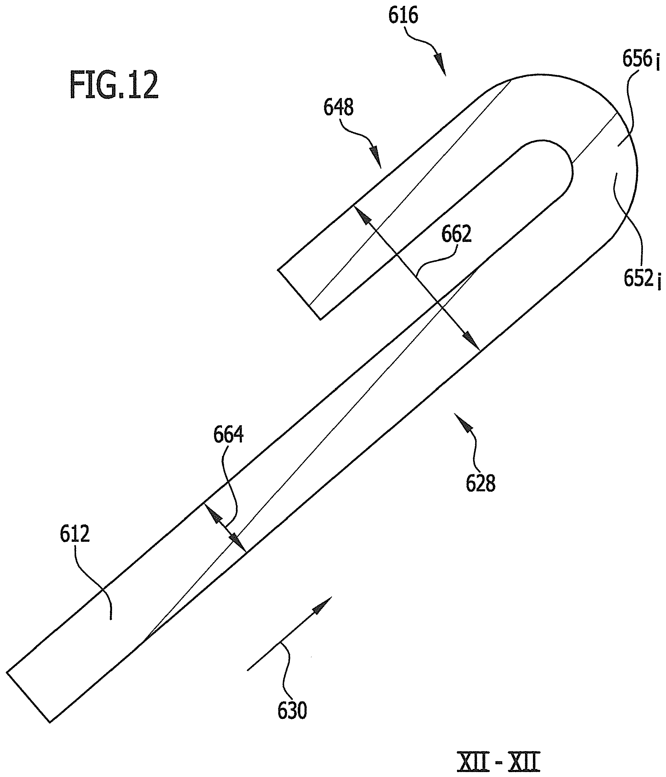

- Fig. 12: einen Schnitt XII-XII durch einen Zahn des Sensorkranzes gemäß Fig. 11;
- Fig. 13: eine Darstellung eines zweiten Ausführungsbeispiels einer erfindungsgemäßen vorderen Radeinheit ähnlich wie in Fig. 3;
- Fig. 14: eine Darstellung des zweiten Ausführungsbeispiels einer erfindungsgemäßen vorderen Radeinheit ähnlich wie in Fig. 4;
- Fig. 15: eine Darstellung eines zweiten Ausführungsbeispiels einer erfindungsgemäßen hinteren Radeinheit ähnlich wie in Fig. 6;
- Fig. 16: eine Darstellung des zweiten Ausführungsbeispiels einer erfindungsgemäßen hinteren Radeinheit ähnlich wie in Fig. 7;
- Fig. 17: eine perspektivische Darstellung eines zweiten Ausführungsbeispiels eines erfindungsgemäßen Sensorkranzes und
- Fig. 18: eine Seitenansicht eines zweiten Ausführungsbeispiels eines erfindungsgemäßen Fahrrades.

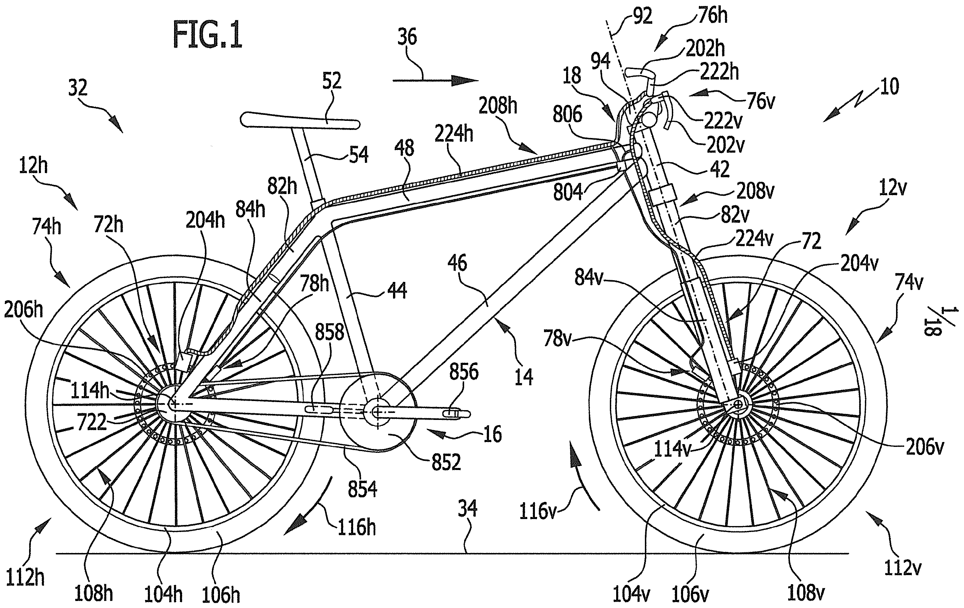

Ein in Fig. 1 beispielhaft dargestelltes und als Ganzes mit 10 bezeichnetes erstes Ausführungsbeispiel eines erfindungsgemäßen Fahrrades umfasst eine vordere Radeinheit 12v und eine hintere Radeinheit 12h, welche durch einen Rahmen 14 miteinander verbunden sind, sowie ein als Ganzes mit 16 bezeichnetes muskelangetriebenes Fahrradantriebssystem, welches durch die Muskelkraft eines Fahrers angetrieben wird, und ein Antiblockiersystem 18.

Dabei erstreckt sich das Fahrrad 10 im Wesentlichen in einer Hauptebene 32, welche in Fig. 1 im Wesentlichen der Darstellungsebene entspricht und bei dem in Fig. 1 auf einer horizontalen Standfläche 34 in Fahrbereitschaft stehenden Fahrrad 10 im Wesentlichen quer, insbesondere senkrecht zu der Standfläche 34 verläuft, und bezogen auf eine Fahrradausrichtung 36, welche bei einer Geradeausfahrt des Fahrrads 10 der Fahrtrichtung entspricht, ist die vordere Radeinheit 12v in einem vorderen Bereich des Fahrrads 10 angeordnet und die hintere Radeinheit 12h in einem hinteren Bereich des Fahrrads 10 angeordnet.

Der Rahmen 14 umfasst ein Steuerrohr 42, an welches die vordere Radeinheit 12v drehbar beweglich angeordnet ist, und eine hintere Strebe 44, an welche die hintere Radeinheit 12h angeordnet ist, wobei das Steuerrohr 42 und die hintere Strebe 44 durch ein erstes Rohr 46 und beispielsweise ein weiteres, zweites Rohr 48 miteinander verbunden sind.

An den Rahmen 14 ist ein Sattel 52 mit einem Sattelrohr 54 angeordnet.

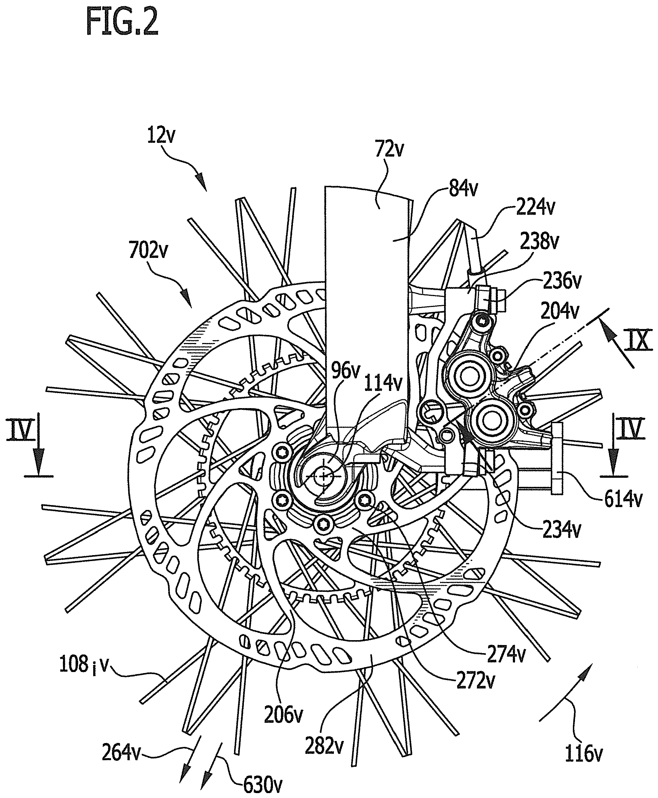

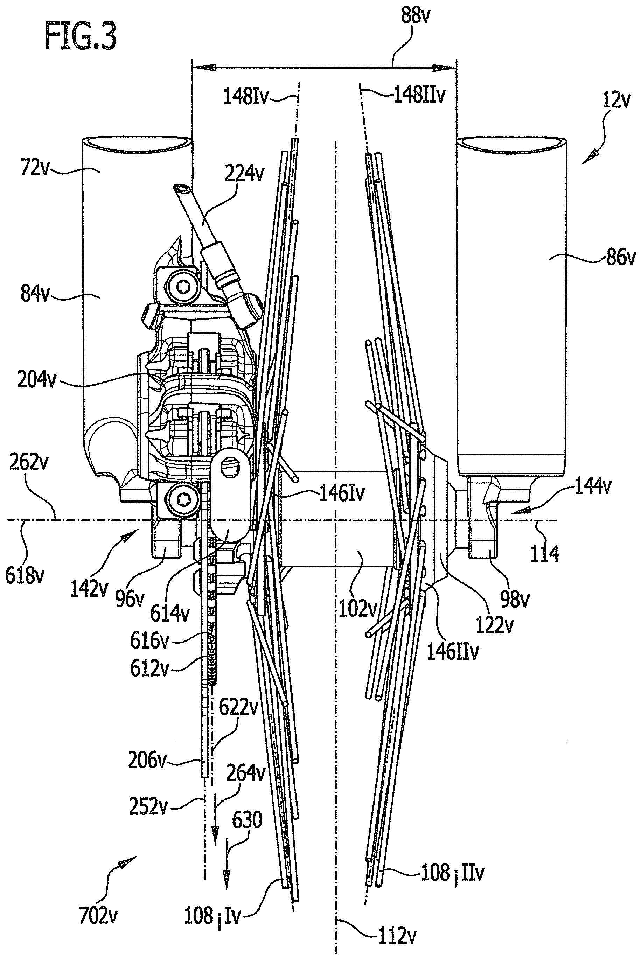

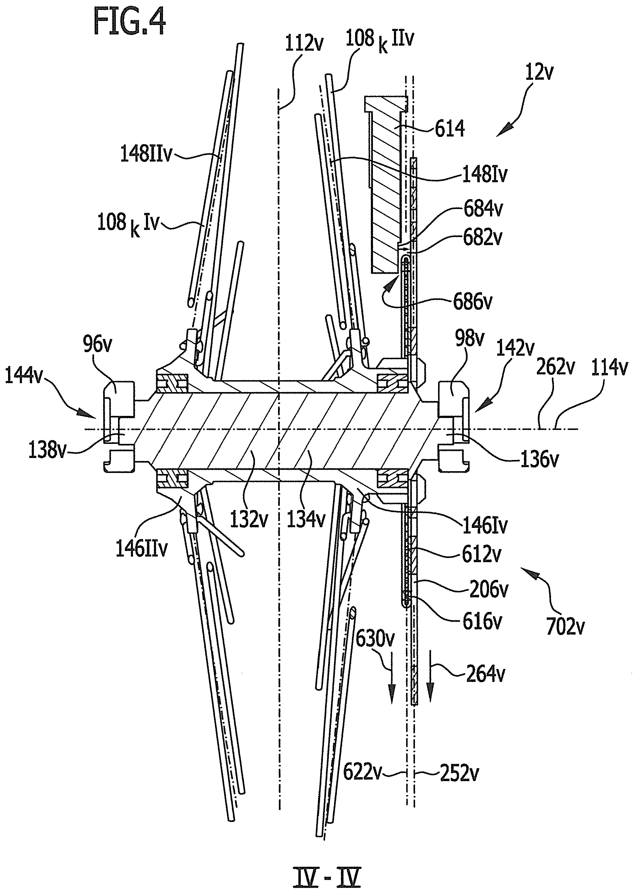

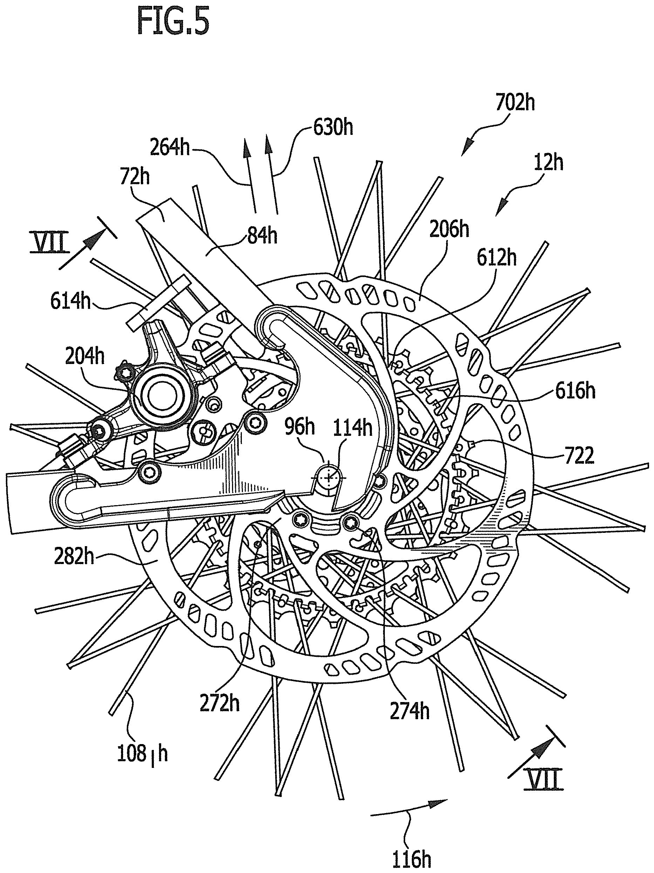

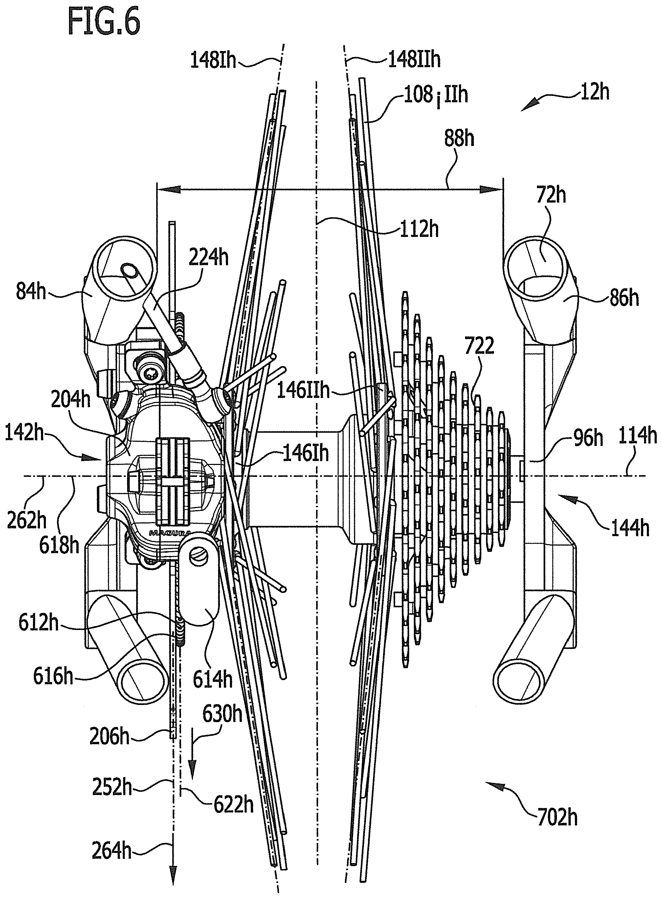

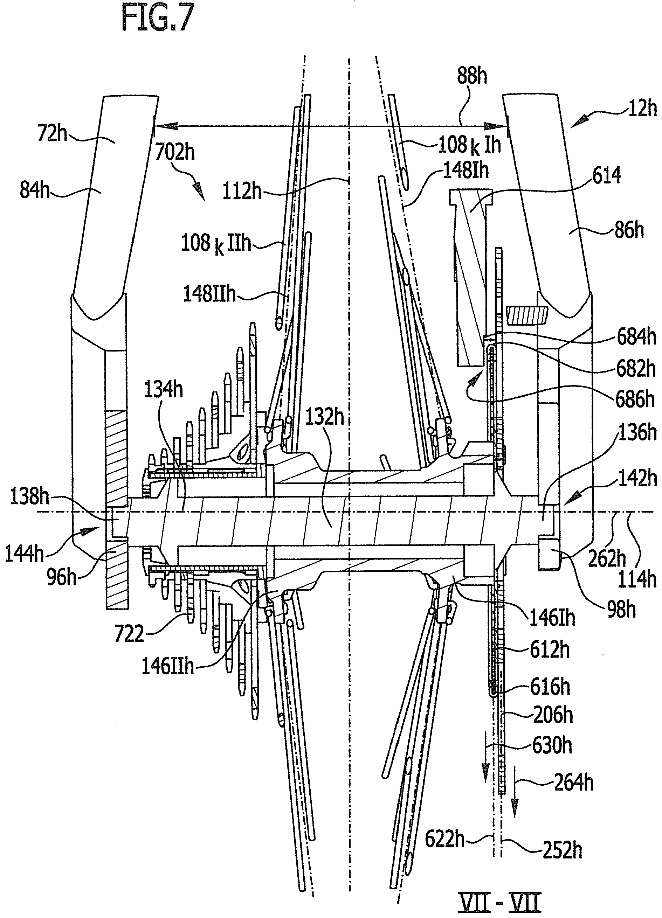

Die vordere Radeinheit 12v, welche in den Fig. 2 bis 4 dargestellt ist, und die hintere Radeinheit 12h, welche in den Fig. 5 bis 7 dargestellt ist, sind ähnlich aufgebaut und werden im Folgenden, soweit sie analog aufgebaut sind, gemeinsam beschrieben, wobei auf die Spezifizierung v und h, soweit diese nicht erforderlich ist, verzichtet wird.

Die Radeinheit 12 umfasst eine Radaufhängung 72, ein Rad 74, welches drehbar beweglich an der Radaufhängung 72 angeordnet ist, eine Bremsvorrichtung 76, welche bremsend auf das Rad 74 einwirkbar ist, so dass die Drehgeschwindigkeit des Rades 74 bei der bremsenden Einwirkung der Bremsvorrichtung 76 kleiner wird, sowie eine Sensoreinheit 78, mit welcher die Drehgeschwindigkeit des Rades 74 ermittelbar ist.

Die Radaufhängung 72 umfasst einen Schaft 82, ein erstes Gabelbein 84 und ein zweites Gabelbein 86, wobei die Gabelbeine 84 und 86 an dem Schaft 82 angeordnet sind.

Das erste Gabelbein 84 und das zweite Gabelbein 86 verlaufen im Wesentlichen zueinander parallel und sind mit einem Abstand 88 zueinander beabstandet, so dass das Rad 74 zwischen dem ersten Gabelbein 84 und dem zweiten Gabelbein 86 positionierbar ist.

Der Schaft 82v der vorderen Radeinheit 12v ist dabei insbesondere um eine Lenkachse 92 drehbar beweglich an das Steuerrohr 42 angeordnet, so dass die vordere Radeinheit 12v mit einem Lenker 94 lenkbar ist.

Der Schaft 82h der hinteren Radeinheit 12h ist beispielsweise an den Rahmen 14, insbesondere an die hintere Strebe 44, angeordnet.

Bei der Radaufhängung 72 ist ein erstes Ausfallende 96, welches beispielsweise an dem ersten Gabelbein 84 angeordnet ist, und ein zweites Ausfallende 94, welches beispielsweise an dem zweiten Gabelbein 96 angeordnet ist, zur Befestigung des Rades 74 vorgesehen.

Das Rad 74 umfasst eine Nabe 102, eine Felge 104, auf der ein luftgefüllter Reifen 106 aufgezogen ist, und mehrere Speichen 108, von denen in den Figuren nur einige Speichen 108ᵢ, ... beispielhaft gekennzeichnet sind, wobei die Speichen 108 die Felge 104 mit der Nabe 102 verbinden.

Dabei verläuft die Felge 104 im Wesentlichen entlang eines Kreises, der in einer Radebene 112 liegt und durch dessen Mittelpunkt eine geometrische Drehachse 114 verläuft, wobei die Drehachse 114 senkrecht zu der Radebene 112 verläuft und die Radebene 112 bei dem in Fig. 1 dargestellten Fahrrad 10 mit der Hauptebene 32 zusammenfällt, wobei jedoch die Vorderradebene 112v auch quer zu der Hauptebene 32 verlaufen kann, da das Vorderrad 14v an der drehbaren vorderen Radaufhängung 72v befestigt ist.

Dabei ist die Felge 104, insbesondere das Rad 74, in eine Umlaufrichtung 116 drehbar um die Drehachse 116 beweglich angeordnet.

Dabei verläuft die Drehrichtung 116 im Wesentlichen in der Radebene 112 und ist entlang einer Umdrehung um die Drehachse 114 stets senkrecht zu einer radialen Richtung der Drehachse 114.

Die Nabe 104 ist im Wesentlichen senkrecht zu der Radebene 112 und entlang der Drehachse 114 ausgerichtet, wie in Fig. 2 bis 7 dargestellt ist, und damit ist die Nabe 102 in der Radebene 112 zentriert zu der Felge 104 angeordnet, wie in Fig. 1 dargestellt ist.

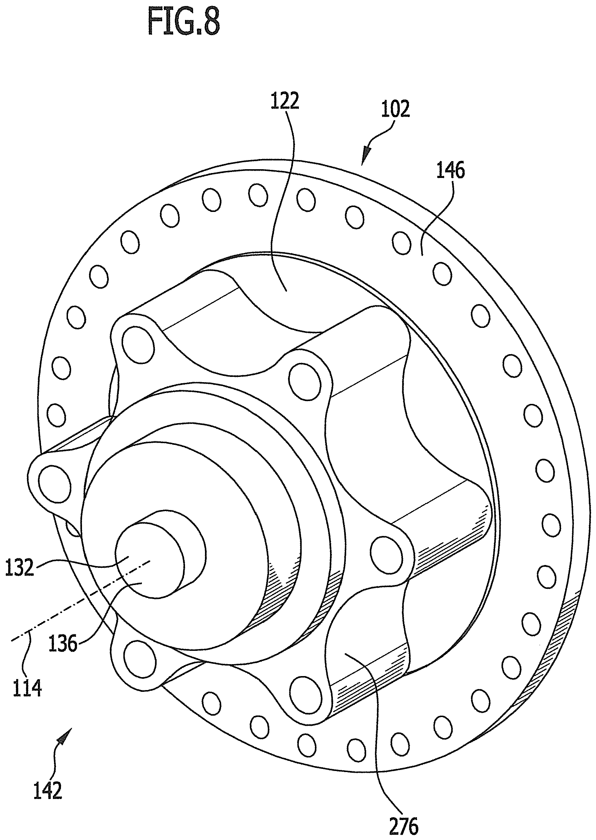

Die Nabe 102, welche ohne weitere Bauteile auch in Fig. 8 dargestellt ist, umfasst ein Nabengehäuse 122 und eine Radachse 132, welche entlang der Drehachse 114 ausgerichtet ist, wobei die Radachse 132 drehbar um die Drehachse 114 in dem Nabengehäuse 122 gelagert ist. Dabei ist ein Mittelbereich 134 der Radachse 132, welcher zwischen einem ersten Endbereich 136 und einem zweiten Endbereich 138 der Radachse 132 liegt, in dem Nabengehäuse 122 drehbar gelagert und der erste Endbereich 136 und der zweite Endbereich 138 der Radachse 132 ragen aus sich gegenüberliegenden Frontseiten 142 und 144 des Nabengehäuses 122 aus diesem heraus.

Das Rad 74 ist mit der Radachse 132 an der Radaufhängung 72 befestigt, wobei insbesondere der erste Endbereich 136 der Radachse 132 an dem ersten Ausfallende 96 angeordnet ist und der zweite Endbereich 138 der Radachse 132 an dem zweiten Ausfallende 98 angeordnet ist.

Das Nabengehäuse 122 umfasst einen ersten Ringbund 146I und einen zweiten Ringbund 146II, welche entlang der Drehachse 114 versetzt zueinander angeordnet sind und mit einem jeweils gleichen Abstand zu der Radebene 112 auf unterschiedlichen Seiten der Radebene 112 liegen, so dass der erste Ringbund 146I zwischen der Radebene 112 und der Frontseite 142 positioniert ist und der zweite Ringbund 146II zwischen der Radebene 112 und der zweiten Frontseite 144 positioniert ist. Die Ringbünde 146I und 146II sind zur Befestigung der Speichen 108 vorgesehen.

Von den Speichen 108 sind einige Speichen 108I an den ersten Ringbund 146I angeordnet und die restlichen Speichen 108II sind an dem zweiten Ringbund 146II angeordnet, wobei die Anzahl der Speichen 108I und die Anzahl der Speichen 108II jeweils der Hälfte der Gesamtanzahl der Speichen 108 entspricht.

In den Figuren sind nur einige Speichen 108ᵢI, ... der Speichen 108I und einige Speichen 108ᵢII, ... der Speichen 108II beispielhaft gekennzeichnet.

Soweit die Ausgestaltung und Anordnung der Speichen 108I und des ersten Ringbundes 146I sowie der Speichen 108II und des zweiten Ringbundes 146II analog sind, werden diese im Folgenden gemeinsam beschrieben und auf die Spezifizierung I und II wird, soweit es möglich ist, verzichtet.

Die Speichen 108 erstrecken sich von dem Ringbund 146, an welchem sie befestigt sind, bis zu der Felge 104, an welcher sie ebenso befestigt sind, so dass die Felge 104 mit dem Nabengehäuse 122 relativ zu der Radachse 132 um die Drehachse 114 rotierbar ist.

Die Speichen 108 verlaufen dabei im Wesentlichen in einer Speichenfläche 148, wobei in einem Bereich der Drehachse 114 die Speichenfläche 148 von der Radebene 112 beabstandet ist, insbesondere mit einem Abstand, mit welchem auch der Ringbund 146 zu der Radebene 112 beabstandet ist, so dass die Speichenfläche 148 von dem Ringbund 146 ausgehend verläuft, und in der zu der Drehachse 114 radialen Richtung die Speichenfläche 148 auf die Radebene 112 zu verläuft und im Bereich der Felge 104 auf die Radebene 112 trifft und die Speichenfläche 148 dabei zu der Drehachse 114 rotationssymmetrisch ist und konusartig ausgebildet ist.

Dabei verlaufen die erste Speichenfläche 148I und die zweite Speichenfläche 148II im Wesentlichen spiegelsymmetrisch zur Radebene 112, so dass also die spitzenartigen Bereiche der konusartigen Speichenflächen 148I und 148II entlang der Drehachse 114 beabstandet sind und von den spitzenartigen Bereichen ausgehend die Speichenflächen 148I und 148II aufeinander zu verlaufen.

Die Bremsvorrichtung 76 umfasst eine Betätigungseinheit 202, eine Bremszange 204, die insbesondere an der Radaufhängung 72 angeordnet ist, und eine Bremsscheibe 206, welche an der Nabe 102, insbesondere an dem Nabengehäuse 122, angeordnet ist.

Dabei sind die Betätigungseinheit 202, beispielsweise ein Hebel, und die Bremszange 204 über ein Hydrauliksystem 208 druckübertragend verbunden, so dass durch ein Betätigen der Betätigungseinheit 202 die Bremszange 204 betätigt wird, wodurch die Bremszange 204 bremsend mit der Bremsscheibe 206 zusammenwirkt und somit eine Drehbewegung der Bremsscheibe 206 verringert wird und da die Bremsscheibe 206 an dem Rad 74 angeordnet ist, wird somit auch eine Drehgeschwindigkeit einer Drehbewegung des Rades 74 verringert.

Das Hydrauliksystem 208 umfasst einen Geberzylinder 222, der über eine Druckleitung 224 mit der Bremszange 204 verbunden ist.

Die Bremszange 204 umfasst ein Bremszangengehäuse 232, welches mit einer ersten Halterung 234 und einer zweiten Halterung 236 an der Radaufhängung 72, insbesondere an einem der Gabelbeine 84, 86, beispielsweise mit einem Bremszangenhalter 238, anmontiert ist.

Die Bremszange 204 umfasst außerdem einen ersten Bremsbelag 242 und einen zweiten Bremsbelag 244, welche an dem Bremszangengehäuse 232 beweglich angeordnet sind, wobei die Bremsbeläge 242 und 244 beabstandet zueinander angeordnet sind, so dass die Bremsscheibe 206 zwischen den Bremsbelägen 242 und 244 positionierbar ist.

Der erste Bremsbelag 242 wird von einem ersten Kolben 246 beaufschlagt und der zweite Bremsbelag 244 wird von einem zweiten Kolben 248 beaufschlagt, wobei der erste Kolben 246 und der zweite Kolben 248 mit dem Hydrauliksystem 208, insbesondere über die Druckleitung 224, verbunden sind.

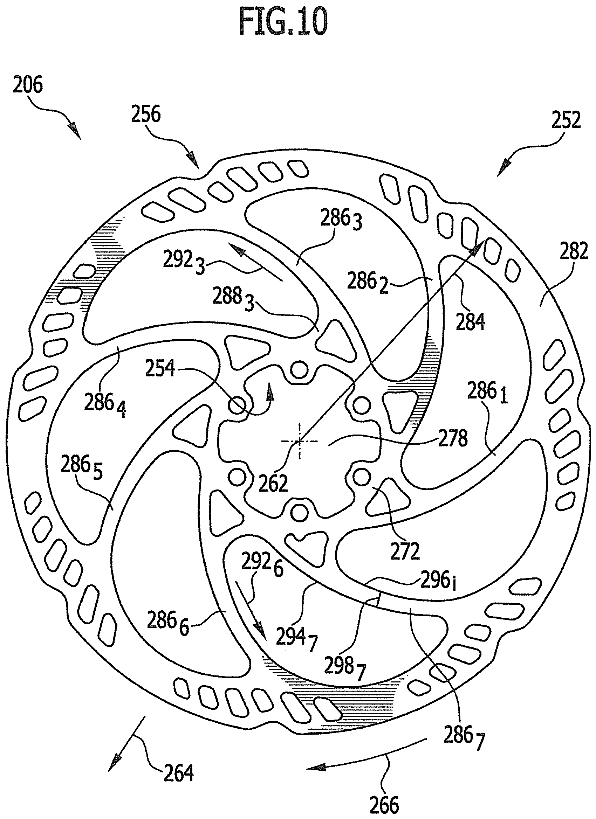

Die Bremsscheibe 206 erstreckt sich im Wesentlichen in einer Bremsscheibenebene 252, welche in Fig. 10 der Darstellungsebene entspricht, von einem Innenbereich 254 bis zu einem Außenbereich 256, wobei die Bremsscheibe 206 sich zu einer Bremsscheibenachse 262, welche im Wesentlichen senkrecht zu der Bremsscheibenebene 252 verläuft, in einer zu der Bremsscheibenachse 262 radialen Richtung 264 von dem Innenbereich 254 bis zu dem Außenbereich 256 erstreckt und der Außenbereich 256 bezogen auf die radiale Richtung 264 radial außerhalb des Innenbereiches 254 liegt und der Außenbereich 256 in der Bremsscheibenebene 252 den Innenbereich 254 entlang einer Umlaufrichtung 266 um die Bremsscheibenachse 262 umrandet.

In dem Innenbereich 254 der Bremsscheibe 206 ist ein Montagering 272 vorgesehen, welcher mit einem Befestigungselement 274 an die Nabe 102, insbesondere an ein Halteelement 276, welches beispielsweise flanschähnlich ausgebildet ist, des Nabengehäuses 122, montierbar ist, so dass die Bremsscheibe 206 fest mit dem Nabengehäuse 122 verbunden ist.

Dazu umfasst das Halteelement 276 und der Montagering 272 gemäß den Ausführungsbeispielen in Fig. 8 und 10 jeweils sechs Löcher und das Befestigungselement 274 umfasst sechs Verbindungsteile, welche für je ein Loch des Montagerings 272 und ein Loch des Halteelements 276 vorgesehen sind und so der Montagering 272 mit den Verbindungsteilen des Befestigungselements 274 mit dem Halteelement 276 verbunden ist.

Bei einer Variante umfasst das Halteelement 276 einen gezahnten Ring und das Befestigungselement 274 umfasst einen Aufnahmebereich für den gezahnten Ring und der Montagering 272 ist an das Befestigungselement 274 montierbar und somit ist der Montagering 272 mit dem Befestigungselement 274 an das Halteelement 276 montierbar.

In dem Montagering 272 ist zentriert eine Achsendurchgriffsöffnung 278 angeordnet, durch welche die Radachse 132 durchgreifen kann und wobei die Bremsscheibenachse 262 durch die Achsendurchgriffsöffnung 278 hindurchverläuft.

In dem Außenbereich 256 der Bremsscheibe 206 ist ein Bremsring 282, welcher ringförmig die Bremsscheibenachse 262 im Wesentlichen mit einem Radius 284 umgibt, angeordnet und die Bremsbeläge 242 und 244 beaufschlagen den Bremsring 282 bei einem Bremsvorgang.

Der Montagering 272 und der Bremsring 282 sind durch Tragestege 286 miteinander verbunden wobei beispielsweise die Tragestege 286 sich mit Zusatztragestegen 288 an dem Montagering 272 abstützen.

Dabei sind in den Figuren nur einige Tragestege 286ᵢ, ... der Tragestege 286 gekennzeichnet und nur einige Zusatztragestege 288ᵢ, ... der Zusatztragestege 288 gekennzeichnet.

In der Ausführungsform gemäß Fig. 10 sind N = 7 Tragestege 286₁ bis 286₇ vorgesehen.

Dabei sind die Tragestege 286 länglich ausgebildet und erstrecken sich von dem Innenbereich 254 zu dem Außenbereich 256 der Bremsscheibe 206, beispielsweise erstrecken sich die Tragestege 286 bogenförmig.

Jeder einzelne Tragesteg 286ᵢ der Tragestege 286 erstreckt sich länglich von dem Innenbereich 254 zu dem Außenbereich 256 in eine Erstreckungsrichtung 292ᵢ, wobei die Erstreckungsrichtung 292ᵢ geneigt zu der zu der Bremsscheibenachse 262 radialen Richtung 264 verläuft.

Jeder Tragesteg 286ᵢ der Tragestege 286 erstreckt sich quer zu seiner Erstreckungsrichtung 292ᵢ von einem ersten Rand 294ᵢ zu einem zweiten Rand 296ᵢ, wobei ein Abstand der Ränder 294ᵢ und 296ᵢ eine Breite 298ᵢ des Tragesteges 286ᵢ darstellt und die Breite 298ᵢ bezogen auf eine zu der radialen Richtung 264 quer verlaufenden Richtung, insbesondere im Wesentlichen in der die Bremsscheibenachse 262 umlaufenden Umlaufrichtung 266, gemessen wird.

In den Figuren sind nur einige Ränder 294_{if} ... und 296ᵢ, ... der Ränder 294 und 296 gekennzeichnet.

Bei dem Ausführungsbeispiel sind die Breiten 298ᵢ der Tragestege 286ᵢ entsprechend einer Breite 298 gleich groß, wobei bei einer Variante vorgesehen ist, dass die Breiten 298ᵢ, ... unterschiedlich groß sind. Insbesondere sind die Tragestege 286 in Richtung der Umlaufrichtung 266 periodisch angeordnet, beispielsweise ist die Anordnung der Tragestege 286 n-drehsymmetrisch bezüglich der Bremsscheibenachse 262 ausgebildet, d.h. dass die Anordnung der Stege 286 bezüglich einer Drehung um die Bremsscheibenachse 262 mit einem Winkel 360°/n symmetrisch ist, wobei n eine natürliche Zahl ist und in dem Ausführungsbeispiel der Anzahl N der Tragestege 286 entspricht.

Damit funktioniert die Bremsvorrichtung 76 wie folgt.

Die Betätigungseinheit 202 wirkt, beispielsweise mit dem Hebel, auf den Geberzylinder 222 des Hydrauliksystems 208 ein, wodurch der Geberzylinder 222 eine Druckerhöhung in dem Hydrauliksystem 208 erzeugt, welche durch die Druckleitung 224 zu der Bremszange 204 mittels einer Hydraulikflüssigkeit übertragen wird, wodurch die Bremszange 204 betätigt wird.

Dabei wird in der Bremszange 204 der erhöhte Druck in dem Hydrauliksystem 208 in eine mechanische Bewegung der Kolben 246 und 248 umgesetzt, wodurch der erste Kolben 246 den ersten Bremsbelag 242 beaufschlagt und der zweite Kolben 248 den zweiten Bremsbelag 244 beaufschlagt und dadurch der erste Bremsbelag 242 und der zweite Bremsbelag 244 sich aufeinander zubewegen, so dass der zwischen dem ersten Bremsbelag 242 und dem zweiten Bremsbelag 244 positionierte Bremsring 282, welcher bei einer Fahrt des Fahrrades 10 rotiert, von je einer Seite von dem ersten Bremsbelag 242 und dem zweiten Bremsbelag 244 beaufschlagt wird und durch die dadurch entstehende Reibung die Drehgeschwindigkeit des Bremsrings 282 und folglich auch die Drehgeschwindigkeit des mit dem Bremsring 282 verbundenen Rades 74, verringert wird.

Die Sensoreinheit 78 umfasst einen Sensorkranz 612, welcher an dem Rad 74 angeordnet ist, und einen Sensor 614, der auf einen Abtastbereich 616 des Sensorkranzes 612 ausgerichtet ist und diesen Abtastbereich 616 detektiert, insbesondere eine Relativbewegung des Abtastbereiches 616 relativ zu dem Sensor 614 detektiert.

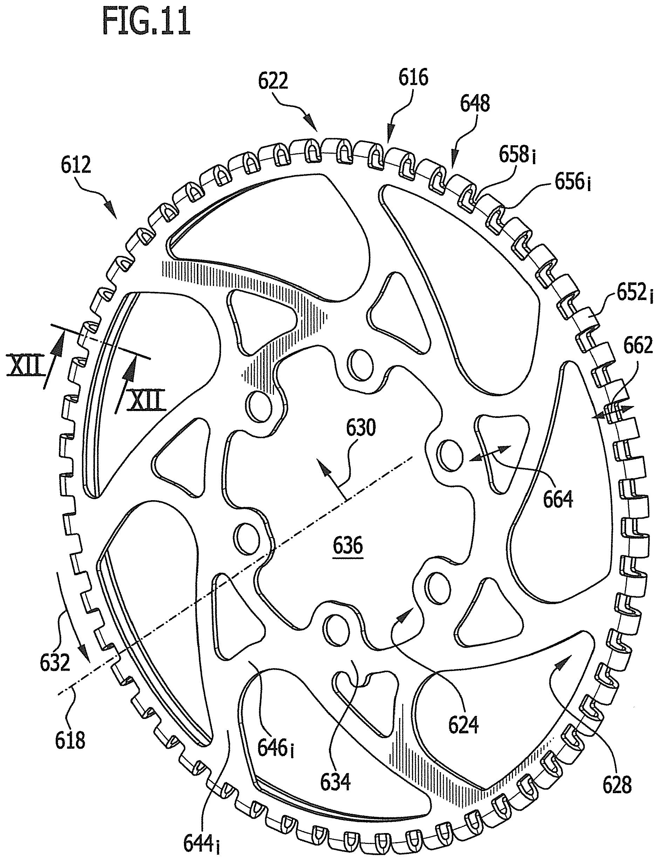

Das in Fig. 11 dargestellte erste Ausführungsbeispiel eines erfindungsgemäßen Sensorkranzes 612 erstreckt sich im Wesentlichen in einer zu einer Sensorkranzachse 618 senkrecht verlaufenden Sensorkranzebene 622 ausgehend von einem Innenbereich 624 zu einem Außenbereich 628, wobei bezüglich einer zu der Sensorkranzachse 618 radialen Richtung 630 der Innenbereich 624 radial innenliegend angeordnet ist und der Außenbereich 628 radial außenliegend angeordnet ist, so dass der Außenbereich 628 in eine die Sensorkranzachse 618 umlaufende Umlaufrichtung 632 den Innenbereich 624 in der Sensorkranzebene 622 umrandet.

In dem Innenbereich 624 des Sensorkranzes 612 ist ein Montagering 634, welcher eine Achsendurchgriffsöffnung 636 in der Sensorkranzebene 622 umrandet, angeordnet und mit dem Montagering 634 ist der Sensorkranz 612 an das Rad 74, insbesondere an das Nabengehäuse 122, montierbar.

Bei der Ausführungsform gemäß Fig. 11 ist der Montagering 634, welcher in der Sensorkranzebene 622 liegt und somit insbesondere die Sensorkranzebene 622 definiert, in analoger Weise wie der Montagering 272 der Bremsscheibe 206 ausgebildet, so dass vollinhaltlich auf die Ausführungen zu demselben verwiesen werden kann.

Der Außenbereich 628 und der Innenbereich 624 des Sensorkranzes 612 sind beispielswiese mit mehreren Haltestegen 644 verbunden, wobei bei dem Ausführungsbeispiel genauso viele Haltestege 644 vorgesehen sind wie Tragestege 286 an der Bremsscheibe 206 vorgesehen sind.

In den Figuren sind nur einige Haltestege 644ᵢ, ... der Haltestege 644 beispielhaft gekennzeichnet.

Die Haltestege 644 verlaufen dabei geneigt zu der zu der Sensorkranzachse 618 radialen Richtung 630 und sind insbesondere bogenförmig ausgebildet.

Dabei sind die Haltestege 644 in ähnlicher Weise wie die Tragestege 286 der Bremsscheibe 206 ausgebildet, insbesondere sind die Tragestege 286 und die Haltestege 244 mit einer gleichen Breite entlang der Umlaufrichtung 116 geformt.

Beispielsweise stützt sich jeder der Haltestege 644 mit einem von mehreren Zusatzhaltestegen 646 an dem Montagering 634 ab, wobei insbesondere für jeden der Haltestege 644 einer der Zusatzhaltestege 646 vorgesehen ist.

In der Fig. 11 ist nur ein Zusatzhaltesteg 646ᵢ der mehreren Zusatzstege 646 gekennzeichnet.

In dem Außenbereich 628 ist der Abtastbereich 616 des Sensorkranzes 612 angeordnet.

Dabei weist der Abtastbereich 616 entlang der Umlaufrichtung 632 um die Sensorkranzachse 618 herum eine periodisch variierende Struktur 648 auf, welche von dem Sensor 614 detektierbar ist, wobei die periodisch variierende Struktur 648 drehsymmetrisch ist und zwar bezüglich einer Drehung des Abtastbereichs 616 um die Sensorkranzachse 618 mit einem Winkel 360°/m, wobei m eine natürliche Zahl ist, so dass m Drehungen um den Winkel 360°/m einer vollen Umdrehung des Abtastbereiches 616 um die Sensorkranzachse 618 entsprechen und bei dem Ausführungsbeispiel m = 56 ist.

Dabei variiert die periodisch variierende Struktur 648 innerhalb einer Periode, beispielsweise in einem Winkelbereich der von dem Winkel 360°/m aufgespannt wird, in einer ihrer Eigenschaften, insbesondere ändert sich die entsprechende Eigenschaft sprunghaft.

Bei dem Ausführungsbeispiel gemäß Fig. 11 weist der Abtastbereich 616 eine gezahnte Struktur auf, welche im Wesentlichen in der Sensorkranzebene 622 umfangseitig um den Sensorkranz 612 angeordnet ist, wobei die gezahnte Struktur die periodisch variierende Struktur 648 bildet.

Dabei bilden Zähne 652, die in Richtung der Umlaufrichtung 632 periodisch umfangseitig an den Sensorkranz 612 angeordnet sind und sich in der zu der Sensorkranzachse 618 radialen Richtung 630 erstrecken, die gezahnte Struktur, also auch die periodisch variierende Struktur 648.

In den Figuren sind nur einige Zähne 652ᵢ, ... der Zähne 652 gekennzeichnet.

Die Zähne 652 bilden eine bezüglich einer Drehung um die Sensorkranzachse 618 mit einem Winkel 360°/z symmetrische Struktur aus, wobei z eine natürliche Zahl ist und bei dem Ausführungsbeispiel z der Anzahl M=56 der Zähne 652 entspricht.

Dabei sind die Zähne 652 aus Materialbrücken 656 gebildet, wobei die Materialbrücken 656 entlang der Umlaufrichtung 632 periodisch alternierend zwischen Durchbrüchen 658 in dem Außenbereich 628 des Sensorkranzes 612 angeordnet sind, so dass die periodisch variierende Struktur 648 bezüglich des angeordneten Materials und bezüglich der Materialdichte variiert und dabei im Wesentlichen sich diese strukturbildenden Eigenschaften sprunghaft ändern.

Dabei sind in den Figuren nur einige Materialbrücken 656ᵢ, ... der Materialbrücken 656 gekennzeichnet und nur einige der Durchbrüche 658ᵢ, ... der Durchbrüche 658 beispielhaft gekennzeichnet.

Der Sensorkranz 612 ist in dem Außenbereich 628 im Bereich der Materialbrücken 656 umgefalzt, so dass die gezahnte Struktur, in der zu der Sensorkranzachse 618 axialen Richtung eine Dicke 662 aufweist, wobei die Dicke 662 größer ist als eine Dicke 664, welche auch auf die Erstreckung in der zu der Sensorkranzachse 618 axialen Richtung bezogen ist, des Sensorkranzes 612 in einem nicht umgefalzten Bereich, beispielsweise in dem Innenbereich 624, und bei dem Ausführungsbeispiel ist die Dicke 662 etwa doppelt so groß wie die Dicke 664.

Die Zähne 652, also insbesondere auch die Materialbrücken 656, sind aus einem ein Magnetfeld stark beeinflussenden Material ausgebildet, wobei die zwischen den Materialbrücken 656 liegenden Durchbrüche 658 ein Magnetfeld höchstens schwach beeinflussen, so dass eine periodisch variierend unterschiedlich stark magnetfeldbeeinflussende Struktur ausgebildet ist, bei der die Stärke der Magnetfeldbeeinflussung periodisch entlang der Umlaufrichtung 632 um die Sensorkranzachse 618 variiert und da die Drehachse 114 koaxial zu der Sensorkranzachse 618 ausgerichtet ist, variiert dadurch die Stärke der Magnetfeldbeeinflussung durch die periodisch variierende Struktur 648 entlang der Umlaufrichtung 116 um die Drehachse 114.

Dabei variiert bei der periodisch variierend unterschiedlich stark magnetfeldbeeinflussenden Struktur die Stärke der Magnetfeldbeeinflussung an einem Übergang von einem der Durchbrüche 658 zu einer der Materialbrücken 656 sprunghaft.

Der Sensor 614 detektiert die periodisch variierende Struktur 648 des Abtastbereichs 616, insbesondere erfasst der Sensor 614 die Materialbrücken 656 und die Durchbrüche 658, beispielsweise die Übergänge von den Materialbrücken 656 zu den Durchbrüchen 658.

In dem Ausführungsbeispiel ist der Sensor 614 beispielhaft als magnetischer Sensor ausgebildet, so dass die periodisch variierend unterschiedlich stark magnetfeldbeeinflussende Struktur des Abtastbereiches 616 bei einer Relativbewegung relativ zu dem Sensor 614 ein periodisch variierendes Signal auslöst.

Beispielsweise ist der Sensor 614 als Hall-Sensor ausgebildet, so dass unterschiedliche Teilbereiche der unterschiedlich stark magnetfeldbeeinflussenden Struktur des Abtastbereiches 616, insbesondere die Anordnung der abwechselnd angeordneten Materialbrücken 656 und Durchbrüche 658, eine unterschiedlich große Hall-Spannung in dem Sensor 614 erzeugen, und damit der Sensor 614 die periodisch variierende Struktur 648 detektiert.

Bei einer Variante erzeugt der Sensor 614 ein Magnetfeld und detektiert wie dieses Magnetfeld durch magnetfeldbeeinflussende Strukturen, die nicht weiter als eine Reichweite 682 des Sensors 614 von diesem entfernt sind, beeinflusst wird.

Dabei umfasst der Sensor 614 insbesondere eine Sensorfläche 684, an welche sich ein Detektierungsbereich 686, welcher außerhalb des Sensors 614 liegt und sich im Wesentlichen nicht weiter als die Reichweite 682 von der Sensorfläche 684 ausgehend erstreckt, anschließt, wobei der Sensor 614 magnetfeldbeeinflussende Strukturen innerhalb des Detektierungsbereiches 686 detektiert.

Beispielsweise durchströmt ein elektrischer Strom die Sensorfläche 684, wobei durch den Hall-Effekt bei einem die Sensorfläche 684 durchlaufenden Magnetfeld, beispielsweise ein durch die periodisch variierend unterschiedlich stark magnetfeldbeeinflussende Struktur, insbesondere die abwechselnd angeordneten Materialbrücken 656 und Durchbrüche 658, unterschiedlich stark ausgebildetes Magnetfeld, sich eine Hall-Spannung senkrecht zu einer Fließrichtung des elektrischen Stromes ausbildet und durch Auswerten dieser Hall-Spannung, deren Größe von der Relativposition der periodisch variierend unterschiedlich stark magnetfeldbeeinflussenden Struktur zu dem Sensor 614 abhängt, der Sensor 614 die periodisch variierende Struktur 648, insbesondere die Materialbrücken 656 und die Durchbrüche 658 detektiert.

In einer Montageposition 702 sind die Bremszange 204 und der Sensor 614 an der Radaufhängung 72 derart anmontiert, dass die Bremszange 204 mit dem Bremsring 282 bremsend zusammenwirkbar angeordnet ist und für den Sensor 614 der Abtastbereich 616 detektierbar ist.

In der Montageposition 702 sind die Bremsscheibe 206 und der Sensorkranz 612 an das Nabengehäuse 122 anmontiert, so dass die Bremsscheibe 206 und der Sensorkranz 612 bei einer Drehung des Rades 74 um die Drehachse 114 mit dem Rad 74 mitrotieren, wobei dabei der Sensorkranz 612 die gleiche Drehgeschwindigkeit wie das Rad 74 aufweist.

Dabei sind in der Montageposition 702 die Drehachse 114, die Bremsscheibenachse 262 und die Sensorkranzachse 618 koaxial ausgerichtet, d.h. insbesondere dass diese Achsen in der Montageposition 702 aufeinander fallen.

Dabei sind der Sensorkranz 612 und die Bremsscheibe 206 derart ausgerichtet, dass die Haltestege 644 des Sensorkranzes 612 und die Tragestege 286 der Bremsscheibe 206 sich abdecken, also in der zu der Drehachse 114 radialen Richtung gleich ausgerichtet sind und bezüglich der zu der Drehachse 114 axialen Richtung aneinander liegen.

Dabei ist der Sensorkranz 612 zwischen der Bremsscheibe 206 und dem ersten Ringbund 262I, welcher näherliegend zu der Bremsscheibe 206 an dem Nabengehäuse 122 angeordnet ist als der Ringbund 262II angeordnet, so dass entlang der zu der Drehachse 114 axialen Richtung die Bremsscheibe 206, der Sensorkranz 612, der Ringbund 146I mit der Speichenfläche 148I die Radebene 112 und darauffolgend der Ringbund 146II mit der Speichenfläche 148II in dieser Reihenfolge angeordnet sind, wobei bei dem Hinterradrad 74h auf den Ringbund 146II noch ein Zahnkranz 722 des Fahrradantriebsystems 16 folgt.

Insbesondere verläuft die Sensorkranzebene 622 zwischen der Bremsscheibenebene 252 und der Speichenfläche 148I und dabei verlaufen die Bremsscheibenebene 252 und die Sensorkranzebene 622 beispielsweise im Wesentlichen parallel zueinander.

Dabei ist der Abtastbereich 616 in einem Bereich zwischen der Bremsscheibe 206 und den Speichen 108 angeordnet, wobei insbesondere der Abtastbereich 616 zwischen der Bremsscheibenebene 252 und der Speichenfläche 148I liegt.

Dabei ist der Abtastbereich 616 beispielsweise in der zu der Drehachse 114 radialen Richtung zu der Drehachse 114 beabstandet und umläuft in Richtung der Umlaufrichtung 116 die Drehachse 114.

Der Sensor 614 ist in der Montageposition 702 derart angeordnet, dass er, insbesondere mit der Sensorfläche 684 auf den Abtastbereich 616 ausgerichtet ist und von einem Teilbereich, beispielsweise einem dem Sensor 614 naheliegenden, insbesondere nächstliegenden Teilbereich, des Abtastbereichs 616 mit einem Abstand, der kleiner ist als die Reichweite 682 des Sensors 614, beabstandet ist, so dass der Teilbereich des Abtastbereiches 616 in dem Detektierungsbereich 686 des Sensors 614 liegt.

Dabei ist der Sensor 614 zwischen der Bremsscheibenebene 252 und der Speichenfläche 148I angeordnet und beispielsweise in einer zu der Speichenfläche 148I zeigenden Richtung versetzt zu der Sensorkranzebene 622 angeordnet, so dass der Sensor 614 teilweise in der zu der Drehachse 114 axialen Richtung neben dem Sensorkranz 612, insbesondere neben dem Abtastbereich 616, mit seiner Sensorfläche 684 angeordnet ist und so, dass die Sensorfläche 684 dem Abtastbereich 616 zugewandt ist.

Der Abtastbereich 616 des Sensorkranzes 612 und die Sensorfläche 684 des Sensors 614 sind sich in der zu der Drehachse 114 radialen Richtung zugewandt, so dass der Sensor 614 die periodisch variierende Struktur 648 des Abtastbereiches 616 in der radialen Richtung detektiert.

Da der Sensor 614 von einem Teilbereich des Abtastbereiches 616 des Sensorkranzes 612 nicht weiter als die Reichweite 682 entfernt ist, detektiert der Sensor 614 die magnetfeldbeeinflussende Wirkung dieses Teilbereiches des Abtastbereiches 616, welcher in dem Detektierungsbereich 686 des Sensors 614 liegt. Wenn der Sensorkranz 612 mit dem Rad 74 um die Drehachse 114 rotiert wechselt durch die periodisch variierend unterschiedlich stark magnetfeldbeeinflussende Struktur des Abtastbereiches 616 die magnetfeldbeeinflussende Wirkung des Teilbereiches des Abtastbereiches 616, der in dem Detektierungsbereich 686 liegt, zeitlich periodisch, wobei die von dem Sensor 614 detektierte zeitliche Veränderung der magnetfeldbeeinflussenden Wirkung des Abtastbereiches 616 auf das Magnetfeld des Sensors 614 von der Drehgeschwindigkeit des Abtastbereiches 616 um die Drehachse 114 und somit von der Drehgeschwindigkeit des Rades 74 um die Drehachse 114 abhängt und somit die Drehgeschwindigkeit des Rades 74 für den Sensor 614 aus der zeitlichen Veränderung der magnetfeldbeeinflussenden Wirkung des in dem Detektierungsbereich 686 liegenden Teilbereiches des Abtastbereiches 616 ermittelbar ist.

Das Antiblockiersystem 18 umfasst eine Steuerungseinheit 804, welche mit den Sensoreinheiten 78v und 78h der vorderen und hinteren Radeinheiten 12v und 12h signalübertragend verbunden ist, und eine Druckregulierungseinheit 806, welche mit dem Hydrauliksystem 208v der vorderen Radeinheit 12v, und bei einer Variante in analoger Weise mit dem Hydrauliksystem 208h der hinteren Radeinheit 12h, den Druck in dem Hydrauliksystem 208 regulierbar verbunden ist, wobei die Steuerungseinheit 804 die Druckregulierungseinheit 806 in Abhängigkeit der gemessenen Drehgeschwindigkeiten des Vorderrades 74v und des Hinterrades 74h, welche von den Sensoreinheiten 78 ermittelt werden und an die Steuerungseinheit 806 übermittelt werden, steuert.

Die Steuerungseinheit 804 des Antiblockiersystems 18 ermittelt aus den von den Sensoreinheiten 78v und 78h übertragenen Drehgeschwindigkeiten der Räder 74v und 74h die Differenz der beiden Drehgeschwindigkeiten der Räder 74 und ermittelt daraus, beispielsweise bei einer zu großen Abweichung der beiden Drehgeschwindigkeiten relativ zueinander, ob eines der Räder 74 blockiert ist, sich also nicht mehr oder nur noch, verglichen mit dem anderen Rad 74, geringfügig dreht, wobei die Blockierung durch eine starke Betätigung der Betätigungseinheit 202 der Bremsvorrichtung 76 und eine daraus resultierende starke Bremseinwirkung der Bremszange 204 auf die Bremsscheibe 206 und somit auf das Rad 74 hervorgerufen ist.

Hierfür ist die Steuerungseinheit 804 beispielsweise mit elektrisch leitfähigen Kabeln mit den Sensoreinheiten 78v und 78h verbunden und die Sensoreinheiten 78 übermitteln die Drehgeschwindigkeiten der Räder 74 in Form von elektrischen Impulsen.

Ebenso ist die Steuerungseinheit 804 beispielsweise mit einem elektrisch leitfähigen Kabel mit der Druckregulierungseinheit 806 verbunden und übermittelt Steuerungsbefehle für die Druckregulierungseinheit 806 in Form von elektrischen Impulsen entlang des Kabels.

Hat die Steuerungseinheit 804 ein Blockieren des Rades 74 ermittelt, steuert sie die Druckregulierungseinheit 806 an, worauf die Druckregulierungseinheit 806 den Druck im Hydrauliksystem 208 der Bremsvorrichtung 76 vermindert, beispielsweise dadurch, dass die Druckregulierungseinheit 806 Hydraulikflüssigkeit aus dem Hydrauliksystem 208 teilweise in einen Zwischenspeicher umleitet.

Durch die Druckverminderung in dem Hydrauliksystem 208, welche von der Druckregulierungseinheit 806 veranlasst ist, beaufschlagen die Kolben 246 und 248 die Bremsbeläge 242 und 244 weniger stark und folglich pressen die Bremsbeläge 242 und 244 weniger stark auf die Bremsscheibe 206, so dass die dadurch erzeugte Reibung kleiner wird und die Blockierung des Rades 74 gelöst wird und das Rad 74 wieder rollt.

Das Fahrradantriebsystem 16 umfasst den Zahnkranz 722, welcher an dem Nabengehäuse 122h der hinteren Radeinheit 12h angeordnet ist, ein Kettenblatt 852 und eine Kette 854, welche beweglich zwischen dem Zahnkranz 722 und dem Kettenblatt 852 gespannt ist, so dass eine Drehbewegung von dem Kettenblatt 852 durch die Kette 854 auf den Zahnkranz 722 übertragen wird, sowie Pedale 856 und 858, wie in Fig. 1 dargestellt ist.

Dabei ist das Kettenblatt 852 drehbar beweglich an den Rahmen 14 angeordnet und die Pedale 856 und 858 sind mit dem Kettenblatt 852 verbunden, so dass der Fahrer, der auf die Pedale 856 und 858 tritt und somit das Kettenblatt 852 in eine Drehbewegung bringt, das Hinterrad 74h zu einer Drehbewegung antreibt, dadurch dass die von dem Fahrer bewirkte Drehbewegung des Kettenblatts 852 über die Kette 854 auf den Zahnkranz 722 und somit auf Nabengehäuse 122h übertragen wird.

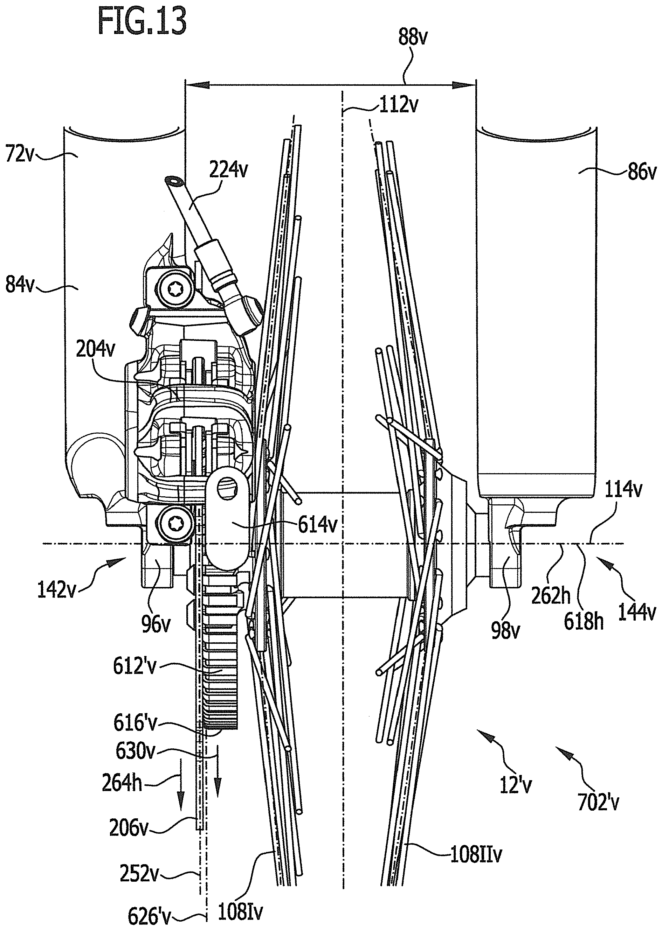

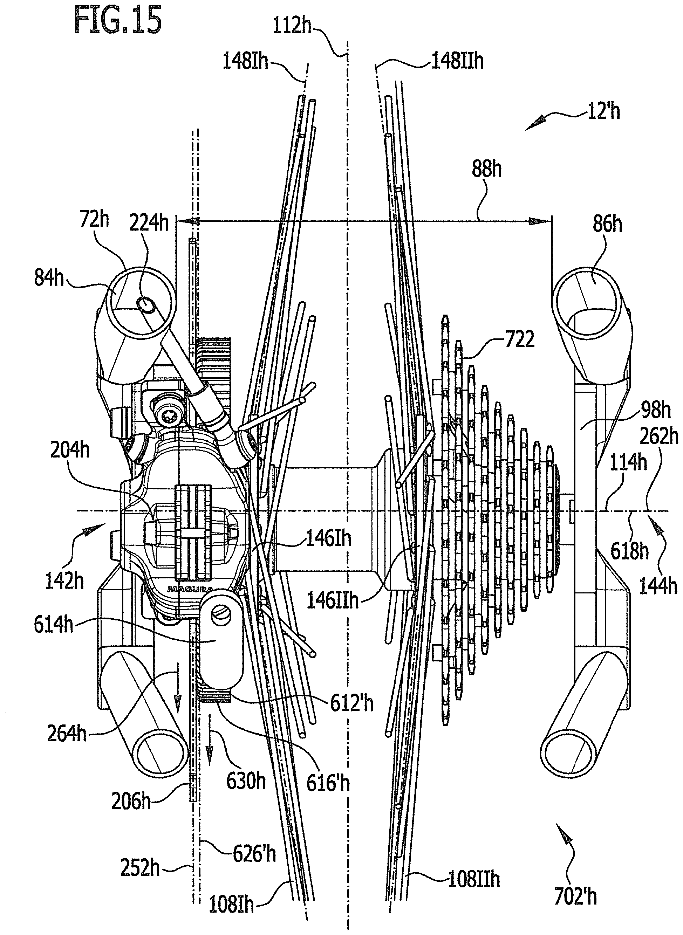

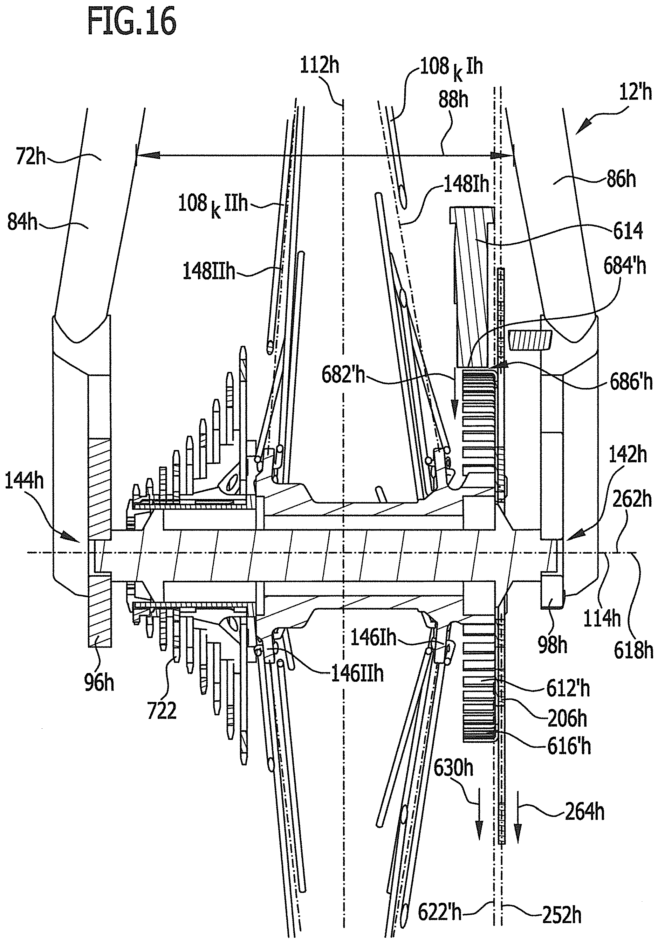

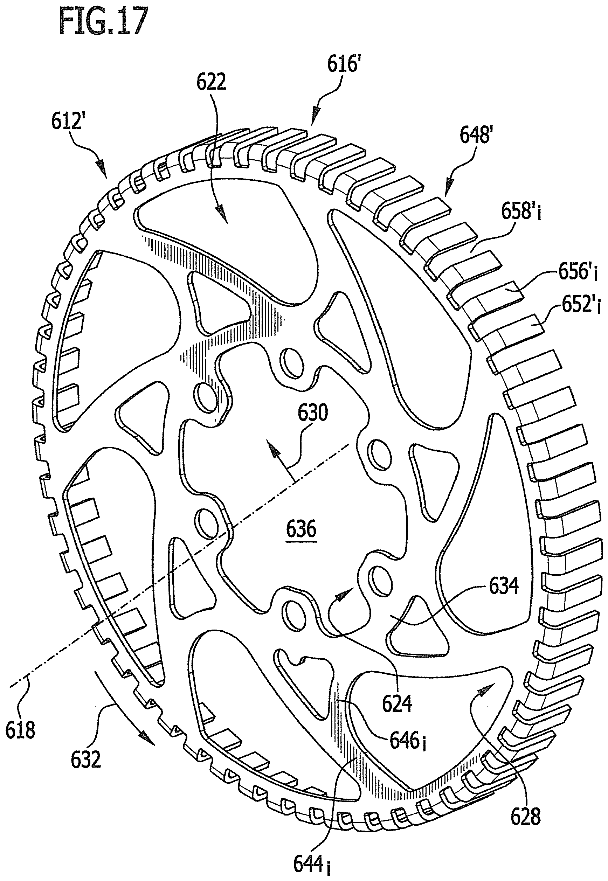

Bei einem zweiten Ausführungsbeispiel einer erfindungsgemäßen Radeinheit 12', dargestellt in Fig. 13 bis 17, sind diejenigen Teile, die mit denen des ersten Ausführungsbeispiels identisch sind, mit denselben Bezugszeichen versehen, so dass bezüglich der Beschreibung derselben vollinhaltlich auf die Ausführungen zu dem ersten Ausführungsbeispiel verwiesen werden kann. Bei dem zweiten Ausführungsbeispiel erstreckt sich der Sensorkranz 612' mit seinem Innenbereich 624 in der Sensorkranzebene 622, welche durch den in dem Innenbereich 624 angeordneten Montagering 634 definiert wird, und der Abtastbereich 616' verläuft ringförmig in dem Außenbereich 628 und erstreckt sich ausgehend von der Sensorkranzebene 622 in der zu der Sensorkranzachse 618 axialen Richtung.

Dabei verläuft eine gezahnte Struktur des Abtastbereichs 616' umfangseitig um den Sensorkranz 612' herum und die Zähne 652' sind in der zu der Sensorkranzachse 618 axialen Richtung ausgerichtet und erstrecken sich länglich in der zu der Sensorkranzachse 618 axialen Richtung.

Damit verläuft der Abtastbereich 616' bandartig um die Sensorkranzachse 618 herum, wobei die Breite des bandartigen Abtastbereiches 616' in etwa der Länge der sich länglich in der zu der Sensorkranzachse 618 axialen Richtung erstreckenden Zähne entspricht und die längliche Erstreckung des bandartigen Abtastbereiches 616' der Erstreckung der gezahnten Struktur in Richtung der Umlaufrichtung 632 um die Sensorkranzachse 618, also insbesondere dem Umfang der gezahnten Struktur, entspricht.

In der Montageposition 702' ist der Sensorkranz 612' zwischen der Bremsscheibe 206 und den Speichen 108, insbesondere der Speichenfläche 148I, angeordnet, so dass der Abtastbereich 616' ebenso zwischen der Bremsscheibe 206 und den Speichen 108, insbesondere der Speichenfläche 148I, angeordnet ist.

Bei einer Variante ist vorgesehen, dass der Sensorkranz 612' mit seinem Innenbereich 624, insbesondere mit dem Montagering 634 derart angeordnet ist, dass die Bremsscheibe 206 zwischen dem Innenbereich 624, insbesondere dem Montagering 634, des Sensorkranzes 612' und den Speichen 108, insbesondere der Speichenfläche 148I angeordnet ist, und dass die Zähne 652' durch Öffnungen in der Bremsscheibe 206 in den Raum zwischen der Bremsscheibe 206 und den Speichen 108, insbesondere der Speichenfläche 148I, hineingreifen, und so der Abtastbereich 616' zwischen der Bremsscheibenebene 252 und der Speichenfläche 148I angeordnet ist.

Der Sensor 614' ist an dem Bremszangengehäuse 232' derart angeordnet, dass der Sensor 614' mit seiner Sensorfläche 684' auf den Abtastbereich 616' ausgerichtet ist, so dass der Detektierungsbereich 686' sich von der Sensorfläche 684' in der zu der Sensorkranzachse 618 radialen Richtung 630 von dem Sensor 614' hinweg erstreckt.

Damit sind die Sensorfläche 684' und ein der Sensorfläche 684' zugewandter Teilbereich des Abtastbereiches 616' in der zu der Sensorkranzachse 618 radialen Richtung 630 einander zugewandt.

Damit tastet der Sensor 614' den Abtastbereich 616' in der zu der Sensorkranzachse 618 radialen Richtung 630 ab.

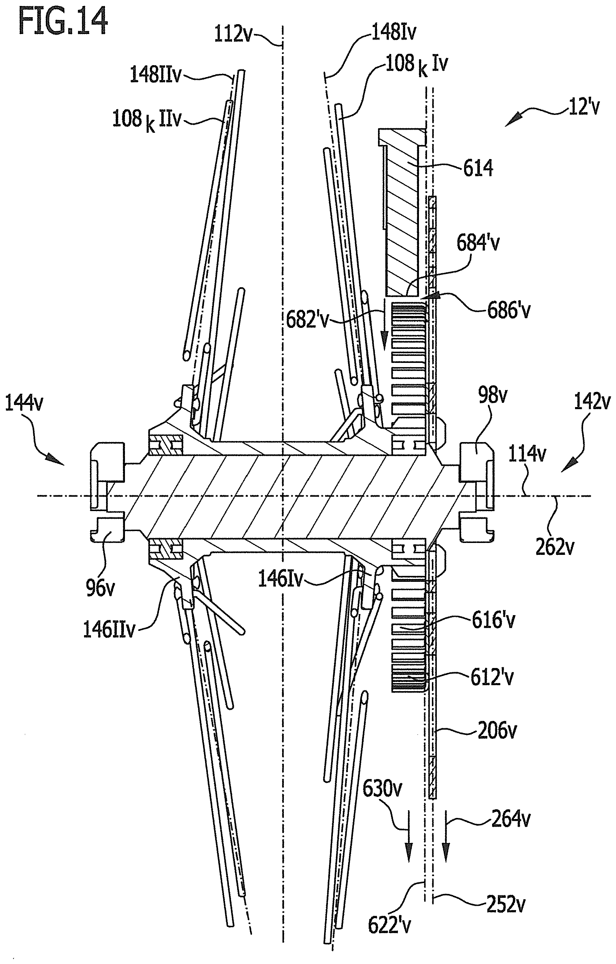

Hierfür ist der Sensor 614' insbesondere zwischen der Bremsscheibenebene 252 und den Speichen 108, beispielsweise der Speichenfläche 148I, angeordnet und in dem Ausführungsbeispiel gemäß Fig. 14 bis 17 ist der Sensor 614' in der zu der Drehachse 114, welche koaxial zur Sensorkranzachse 618 ausgerichtet ist, radialen Richtung radial versetzt zu dem Sensorkranz 612' angeordnet.

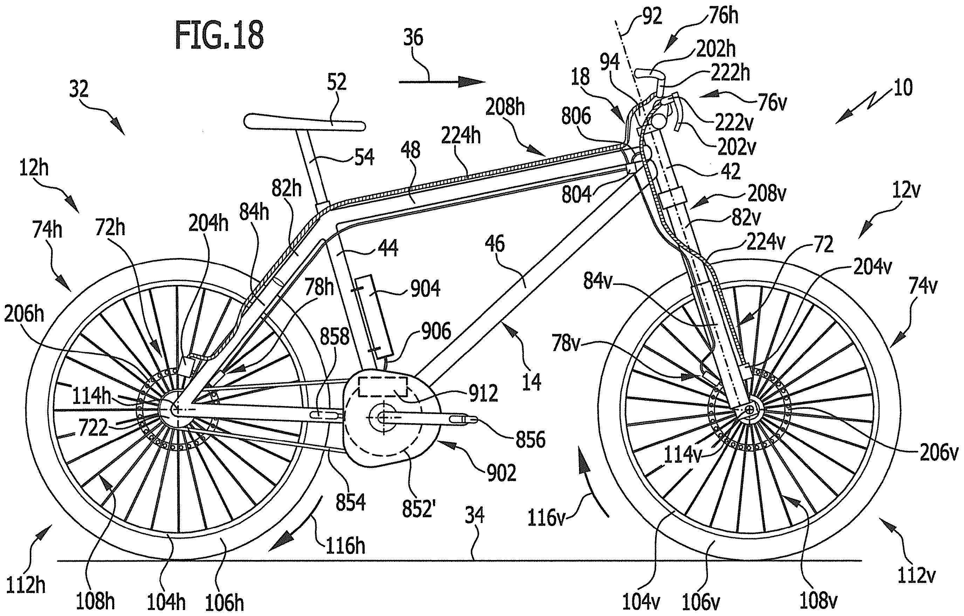

Bei einem dritten Ausführungsbeispiel einer erfindungsgemäßen Lösung, dargestellt in Fig. 18, sind diejenigen Teile, die mit denen eines der voranstehenden Ausführungsbeispiele identisch sind, mit denselben Bezugszeichen versehen, so dass bezüglich der Beschreibung derselben vollinhaltlich auf die Ausführungen im Zusammenhang mit den voranstehenden Ausführungsbeispielen verwiesen werden kann.

Bei dem dritten Ausführungsbeispiel umfasst das erfindungsgemäße Fahrrad 10' einen Zusatzantrieb 902, welcher aus einer Energiequelle 904 über ein Energieübertragungselement 906 mit Energie versorgt wird.

Bei dem Ausführungsbeispiel ist die Energiequelle 904 ein Akkumulator, also ein wiederaufladbarer Speicher für elektrische Energie, und der Zusatzantrieb 902 wird über das als Kabel ausgebildete Energieübertragungselement 906 mit elektrischem Strom versorgt.

Bei einer Variante ist vorgesehen, dass die Energiequelle 904 eine Brennstoffzelle umfasst, welche elektrischen Strom erzeugt und mit diesem den Zusatzantrieb 902 versorgt.

Bei einer weiteren Variante umfasst die Energiequelle 904 eine Solarzelle, welche elektrischen Strom erzeugt und mit diesem den Zusatzantrieb 902 versorgt.

Der Zusatzantrieb 902 umfasst einen elektrischen Antriebsmotor 912 und ein Kettenblatt 852' ist in den Zusatzantrieb 902 integriert und beispielsweise über eine erste Welle drehbar beweglich mit dem elektrischen Antriebsmotor 912 verbunden und mit einer zweiten Welle drehbar beweglich mit den Pedalen 856 und 858 verbunden, so dass der elektrische Antriebsmotor 912 über die erste Welle das Kettenblatt 852' in eine Drehbewegung versetzt, und somit über die Kette 854 den Zahnkranz 722 in eine Drehbewegung versetzt und somit das Hinterrad 74h antreibt und in analoger Weise kann der Fahrer des Fahrrades 10' über die Pedale 856 und 858 das Kettenblatt 852' über die zweite Welle in eine Drehbewegung versetzen und somit ebenso das Hinterrad 74h antreiben.

Im Übrigen sind alle weiteren Teile mit denen von einem der voranstehenden Ausführungsbeispiele identisch, so dass auf die Ausführungen im Zusammenhang mit den voranstehenden Ausführungsbeispielen vollinhaltlich verwiesen werden kann.

## Patentansprüche

1. Radeinheit (12) für ein Fahrrad (10) umfassend eine Nabe (102) und eine Felge (104), welche um eine Drehachse (114) drehbar beweglich angeordnet ist, wobei die Nabe (102) und die Felge (104) durch Speichen (108) miteinander verbunden sind, mit einer Bremsscheibe (206) und einem Sensorkranz (612), **dadurch gekennzeichnet, dass** an der Nabe (102) die Bremsscheibe (206) und der Sensorkranz (612), welcher einen Abtastbereich (616) umfasst, angeordnet sind und dass der Abtastbereich (616) zwischen der Bremsscheibe (206) und den Speichen (108) positioniert ist.

2. Radeinheit (12) nach Anspruch 1, **dadurch gekennzeichnet, dass** Tragestege (286) der Bremsscheibe (206) einen Bremsring (282) der Bremsscheibe (206) tragen.

3. Radeinheit (12) nach einem der voranstehenden Ansprüche, **dadurch gekennzeichnet, dass** die Bremsscheibe (206) sich im Wesentlichen in einer Bremsscheibenebene (252) erstreckt und die Speichen (108) im Wesentlichen in einer Speichenfläche (148) verlaufen, wobei der Abtastbereich (616) zwischen der Bremsscheibenebene (252) und der Speichenfläche (148) angeordnet ist, dass insbesondere der Sensorkranz (612) zwischen der Bremsscheibenebene (252) und der Speichenfläche (148) an der Nabe (102) angeordnet ist, dass insbesondere sich der Sensorkranz (612) im Wesentlichen in einer Sensorkranzebene (622), welche senkrecht zu einer Sensorkranzachse (618) verläuft, erstreckt.

4. Radeinheit (12) nach einem der voranstehenden Ansprüche, **dadurch gekennzeichnet, dass** der Abtastbereich (616) in der Sensorkranzebene (622) verläuft.

5. Radeinheit (12) nach einem der voranstehenden Ansprüche, **dadurch gekennzeichnet, dass** der Abtastbereich (616) quer zu der Sensorkranzebene (622) verläuft, dass insbesondere sich der Sensorkranz (612) in dem Abtastbereich (616) aus der Sensorkranzebene (622) heraus erhebt.

6. Radeinheit (12) nach einem der voranstehenden Ansprüche, **dadurch gekennzeichnet, dass** der Sensorkranz (612) in dem Abtastbereich (616) eine Dicke (662), welche auf die Erstreckung des Sensorkranzes (612) in eine zu der Drehachse (114) axialen Richtung bezogen ist, aufweist, welche dicker ist als eine Dicke (664) in einem Innenbereich (624) des Sensorkranzes (612), welcher relativ zu dem Abtastbereich (616) bezogen auf die Drehachse (114) radial inwärts angeordnet ist, dass insbesondere der Sensorkranz (612) in dem Abtastbereich (616) umgefalzt ist.

7. Radeinheit (12) nach einem der voranstehenden Ansprüche, **dadurch gekennzeichnet, dass** der Sensorkranz (612) in dem Abtastbereich (616) eine entlang der Umlaufrichtung (116) um die Drehachse (114) periodisch variierende Struktur (648) aufweist, dass insbesondere die periodisch variierende Struktur (648) in dem Abtastbereich (616) entlang der Umlaufrichtung (116) um die Drehachse (114) periodisch variierend unterschiedlich stark magnetfeldbeeinflussend ausgebildet ist, dass insbesondere der Sensorkranz (612) in dem Abtastbereich (616) eine entlang der Umlaufrichtung (116) um die Drehachse (114) periodisch gezahnte Struktur aufweist, dass insbesondere die periodisch variierend unterschiedlich stark magnetfeldbeeinflussende Struktur in dem Abtastbereich (616) als periodisch gezahnte Struktur ausgebildet ist.

8. Radeinheit (12) nach einem der voranstehenden Ansprüche, **dadurch gekennzeichnet, dass** die periodisch gezahnte Struktur in dem Abtastbereich (616) durch periodisch entlang der Umlaufrichtung (116) um die Drehachse (114) abwechselnd angeordnete Durchbrüche (658) und Zähne (652) ausgebildet ist.

9. Radeinheit (12) nach einem der voranstehenden Ansprüche, **dadurch gekennzeichnet, dass** die Zähne (652) sich in der Sensorkranzebene (622) länglich erstrecken, dass insbesondere die Zähne (652) sich länglich in einer zu der Drehachse (114) radialen Richtung erstrecken.

10. Radeinheit (12) nach einem der voranstehenden Ansprüche, **dadurch gekennzeichnet, dass** die Zähne (652) sich quer zu der Sensorkranzebene (622) länglich erstrecken, dass insbesondere die Zähne (652) sich länglich in der zu der Drehachse (114) axialen Richtung erstrecken.

11. Radeinheit (12) nach einem der voranstehenden Ansprüche, **dadurch gekennzeichnet, dass** Haltestege (644) des Sensorkranzes (612) den Abtastbereich (616) des Sensorkranzes (612) an einem Montagering (634) des Sensorkranzes (612) halten, dass insbesondere die Haltestege (644) des Sensorkranzes (612) und die Tragestege (286) der Bremsscheibe (206) sich in der zu der Drehachse (114) axialen Richtung abdecken.

12. Radeinheit (12) nach einem der voranstehenden Ansprüche, **dadurch gekennzeichnet, dass** die Radeinheit (12) einen Sensor (614) zum Detektieren des Abtastbereiches (616) umfasst, dass insbesondere der Sensor (614) die periodisch variierende Struktur in dem Abtastbereich (616) detektiert, dass insbesondere der Sensor (614) den Abtastbereich (616) in der zu der Drehachse (114) radialen Richtung detektiert oder dass insbesondere der Sensor (614) den Abtastbereich (616) in der zu der Drehachse (114) axialen Richtung detektiert.

13. Radeinheit (12) nach einem der voranstehenden Ansprüche, **dadurch gekennzeichnet, dass** der Sensor (614) zwischen der Bremsscheibe (206) und den Speichen (108) angeordnet ist.

14. Radeinheit (12) nach einem der voranstehenden Ansprüche, **dadurch gekennzeichnet, dass** der Sensor (614) in der zu der Drehachse (114) radialen Richtung versetzt zu dem Abtastbereich (616) angeordnet ist oder dass der Sensor (614) in der zu der Drehachse (114) axialen Richtung versetzt zu dem Abtastbereich (616) angeordnet ist.

15. Radeinheit (12) nach einem der voranstehenden Ansprüche, **dadurch gekennzeichnet, dass** die Radeinheit (12) eine Bremszange (204) umfasst, wobei die Bremszange (204) und die Bremsscheibe (206) bremsend zusammenwirkbar sind, dass insbesondere der Sensor (614) an der Bremszange (604) angeordnet ist.

16. Radeinheit (12) nach einem der voranstehenden Ansprüche, **dadurch gekennzeichnet, dass** die Radeinheit (12) eine Radaufhängung (72) umfasst, an welcher die Nabe (102) um die Drehachse (114) drehbar beweglich angeordnet ist, dass insbesondere der Sensor (614) an der Radaufhängung (72) angeordnet ist.

17. Fahrrad (10) umfassend eine vordere Radeinheit (12v) und eine hintere Radeinheit (12h), wobei die Radeinheiten (12v, 12h) mit einem Rahmen (14) verbunden sind, **dadurch gekennzeichnet, dass** mindestens eine der Radeinheiten (12v, 12h) des Fahrrades (10) gemäß einem der voranstehenden Ansprüche ausgebildet ist.

## Claims

1. Wheel unit (12) for a bicycle (10), comprising a hub (102) and a wheel rim (104), which is arranged rotatably about an axis of rotation (114), wherein the hub (102) and the wheel rim (104) are connected to one another by spokes (108), with a brake disc (206) and a sensor ring (612),
**characterised in that** the brake disc (206) and the sensor ring (612), which comprises a sensing region (616), are arranged on the hub (102), and **in that** the sensing region (616) is positioned between the brake disc (206) and the spokes (108).

2. Wheel unit (12) according to claim 1, **characterised in that** supporting bars (286) of the brake disc (206) carry a brake ring (282) of the brake disc (206).

3. Wheel unit (12) according to either one of the preceding claims, **characterised in that** the brake disc (206) extends substantially in a brake disc plane (252) and the spokes (108) run substantially in a spoke surface (148), wherein the sensing region (616) is arranged between the brake disc plane (252) and the spoke surface (148), **in that** in particular the sensor ring (612) is arranged on the hub (102) between the brake disc plane (252) and the spoke surface (148), **in that** in particular the sensor ring (612) extends substantially in a sensor ring plane (622) which runs perpendicularly to a sensor ring axis (618).

4. Wheel unit (12) according to any one of the preceding claims, **characterised in that** the sensing region (616) runs in the sensor ring plane (622).

5. Wheel unit (12) according to any one of the preceding claims, **characterised in that** the sensing region (616) runs transversely to the sensor ring plane (622), **in that** in particular the sensor ring (612) stands out from the sensor ring plane (622) in the sensing region (616).

6. Wheel unit (12) according to any one of the preceding claims, **characterised in that** the sensor ring (612), in the sensing region (616), has a thickness (662) which is based on the extent of the sensor ring (612) in a direction that is axial relative to the axis of rotation (114) and which is thicker than a thickness (664) in an inner region (624) of the sensor ring (612), which is arranged radially inwardly relative to the sensing region (616) in relation to the axis of rotation (114), **in that** in particular the sensor ring (612) is folded over in the sensing region (616).

7. Wheel unit (12) according to any one of the preceding claims, **characterised in that** the sensor ring (612), in the sensing region (616), has a structure (648) that varies periodically along the peripheral direction (116) around the axis of rotation (114), **in that** in particular the periodically varying structure (648) in the sensing region (616) is configured so as to influence a magnetic field to differing degrees in a periodically varying manner along the peripheral direction (116) around the axis of rotation (114), **in that** in particular the sensor ring (612), in the sensing region (616), has a structure that is periodically toothed along the peripheral direction (116) around the axis of rotation (114), **in that** in particular the structure in the sensing region (616) influencing a magnetic field to differing degrees in a periodically varying manner is formed as a periodically toothed structure.

8. Wheel unit (12) according to any one of the preceding claims, **characterised in that** the periodically toothed structure in the sensing region (616) is formed by apertures (658) and teeth (652) arranged periodically in alternation along the peripheral direction (116) around the axis of rotation (114).

9. Wheel unit (12) according to any one of the preceding claims, **characterised in that** the teeth (652) extend in an elongate manner in the sensor ring plane (622), **in that** in particular the teeth (652) extend in an elongate manner in a direction that is radial relative to the axis of rotation (114).

10. Wheel unit (12) according to any one of the preceding claims, **characterised in that** the teeth (652) extend in an elongate manner transversely to the sensor ring plane (622), **in that** in particular the teeth (652) extend in an elongate manner in the direction that is axial relative to the axis of rotation (114).

11. Wheel unit (12) according to any one of the preceding claims, **characterised in that** retaining bars (644) of the sensor ring (612) hold the sensing region (616) of the sensor ring (612) on a mounting ring (634) of the sensor ring (612), **in that** in particular the retaining bars (644) of the sensor ring (612) and the supporting bars (286) of the brake disc (206) cover one another in the direction that is axial relative to the axis of rotation (114).

12. Wheel unit (12) according to any one of the preceding claims, **characterised in that** the wheel unit (12) comprises a sensor (614) for detecting the sensing region (616), **in that** in particular the sensor (614) detects the periodically varying structure in the sensing region (616), **in that** in particular the sensor (614) detects the sensing region (616) in the direction that is radial relative to the axis of rotation (114), or that in particular the sensor (614) detects the sensing region (616) in the direction that is axial relative to the axis of rotation (114).

13. Wheel unit (12) according to any one of the preceding claims, **characterised in that** the sensor (614) is arranged between the brake disc (206) and the spokes (108).

14. Wheel unit (12) according to any one of the preceding claims, **characterised in that** the sensor (614) is arranged offset in relation to the sensing region (616) in a direction that is radial relative to the axis of rotation (114) or **in that** the sensor (614) is arranged offset in relation to the sensing region (616) in the direction that is axial relative to the axis of rotation (114).

15. Wheel unit (12) according to any one of the preceding claims, **characterised in that** the wheel unit (12) comprises a brake caliper (204), wherein the brake caliper (204) and the brake disc (206) are configured to cooperate in a braking manner, **in that** in particular the sensor (614) is arranged on the brake caliper (604).

16. Wheel unit (12) according to any one of the preceding claims, **characterised in that** the wheel unit (12) comprises a wheel suspension (72) on which the hub (102) is arranged rotatably about the axis of rotation (114), **in that** in particular the sensor (614) is arranged on the wheel suspension (72).

17. Bicycle (10) comprising a front wheel unit (12v) and a rear wheel unit (12h), wherein the wheel units (12b, 12h) are connected to one another by a frame (14), **characterised in that** at least one of the wheel units (12v, 12h) of the bicycle (10) is in accordance with any one of the preceding claims.

## Revendications

1. Unité de roue (12) pour une bicyclette (10) comportant un moyeu (102) et une jante (104), laquelle est disposée mobile en rotation autour d'un axe de rotation (114), dans laquelle le moyeu (102) et la jante (104) sont reliés l'un à l'autre par des rayons (108), avec un disque de frein (206) et une couronne de capteur (612), **caractérisée en ce que** le disque de frein (206) et la couronne de capteur (612), laquelle comporte une zone de balayage (616), sont disposés sur le moyeu (102) et **en ce que** la zone de balayage (616) est positionnée entre le disque de frein (206) et les rayons (108).

2. Unité de roue (12) selon la revendication 1, **caractérisée en ce que** des nervures de support (286) du disque de frein (206) portent un anneau de freinage (282) du disque de frein (206).

3. Unité de roue (12) selon l'une quelconque des revendications précédentes, **caractérisée en ce que** le disque de frein (206) s'étend sensiblement dans un plan de disque de frein (252) et les rayons (108) s'étendent sensiblement dans une surface de rayon (148), dans laquelle la zone de balayage (616) est disposée entre le plan de disque de frein (252) et la surface de rayon (148), **en ce que**, notamment, la couronne de capteur (612) est disposée sur le moyeu (102) entre le plan de disque de frein (252) et la surface de rayon (148), **en ce que**, notamment, la couronne de capteur (612) s'étend sensiblement dans un plan de couronne de capteur (622), lequel s'étend perpendiculairement à un axe de couronne de capteur (618).

4. Unité de roue (12) selon l'une quelconque des revendications précédentes, **caractérisée en ce que** la zone de balayage (616) s'étend dans le plan de couronne de capteur (622).

5. Unité de roue (12) selon l'une quelconque des revendications précédentes, **caractérisée en ce que** la zone de balayage (616) s'étend transversalement au plan de couronne de capteur (622), **en ce que**, notamment, la couronne de capteur (612) dans la zone de balayage (616) se soulève du plan de couronne de capeteur (622).

6. Unité de roue (12) selon l'une quelconque des revendications précédentes, **caractérisée en ce que** la couronne de capteur (612) dans la zone de balayage (616) présente une épaisseur (662), laquelle est rapportée à l'étendue de la couronne de capteur (612) dans une direction axiale par rapport à l'axe de rotation (114), laquelle est plus épaisse qu'une épaisseur (664) dans une zone intérieure (624) de la couronne de capteur (612), laquelle est agencée radialement à l'intérieur rapporté à l'axe de rotation (114) par rapport à la zone de balayage (616), **en ce que**, notamment, la couronne de capteur (612) dans la zone de balayage (616) est repliée.

7. Unité de roue (12) selon l'une quelconque des revendications précédentes, **caractérisée en ce que** la couronne de capteur (612) dans la zone de balayage (616) présente une structure à variation périodique (648) autour de l'axe de rotation (114) le long de la direction périphérique (116), **en ce que**, notamment, la structure à variation périodique (648) dans la zone de balayage (616) est conçue de manière à influencer le champ magnétique de manière plus ou moins intense avec variation périodique autour de l'axe de rotation (114) le long de la direction périphérique (116), **en ce que**, notamment, la couronne de capteur (612) dans la zone de balayage (616) présente une structure à denture périodique autour de l'axe de rotation (114) le long de la direction périphérique (116), **en ce que**, notamment, la structure dans la zone de balayage (616) influençant le champ magnétique de manière plus ou moins intense avec variation périodique est réalisée sous la forme d'une structure à denture périodique.

8. Unité de roue (12) selon l'une quelconque des revendications précédentes, **caractérisée en ce que** la structure à denture périodique dans la zone de balayage (616) est formée par des percées (658) et des dents (652) disposées en alternance périodiquement autour de l'axe de rotation (114) le long de la direction périphérique (116).

9. Unité de roue (12) selon l'une quelconque des revendications précédentes, **caractérisée en ce que** les dents (652) s'étendent de manière allongée dans le plan de couronne de capteur (622), **en ce que**, notamment, les dents (652) s'étendent de manière allongée dans une direction radiale par rapport à l'axe de rotation (114).

10. Unité de roue (12) selon l'une quelconque des revendications précédentes, **caractérisée en ce que** les dents (652) s'étendent de manière allongée transversalement au plan de couronne de capteur (622), **en ce que**, notamment, les dents (652) s'étendent de manière allongée dans la direction axiale par rapport à l'axe de rotation (114).

11. Unité de roue (12) selon l'une quelconque des revendications précédentes, **caractérisée en ce que** des nervures de retenue (644) de la couronne de capteur (612) retiennent la zone de balayage (616) de la couronne de capteur (612) sur un anneau de montage (634) de la couronne de capteur (612), **en ce que**, notamment, les nervures de retenue (644) de la couronne de capteur (612) et les nervures de support (286) du disque de frein (206) se recouvrent dans la direction axiale par rapport à l'axe de rotation (114).

12. Unité de roue (12) selon l'une quelconque des revendications précédentes, **caractérisée en ce que** l'unité de roue (12) comporte un capteur (614) destiné à détecter la zone de balayage (616), **en ce que**, notamment, le capteur (614) détecte la structure à variation périodique dans la zone de balayage (616), **en ce que**, notamment, le capteur (614) détecte la zone de balayage (616) dans la direction radiale par rapport à l'axe de rotation (114) ou **en ce que**, notamment, le capteur (614) détecte la zone de balayage (616) dans la direction axiale par rapport à l'axe de rotation (114).

13. Unité de roue (12) selon l'une quelconque des revendications précédentes, **caractérisée en ce que** le capteur (614) est disposé entre le disque de frein (206) et les rayons (108).

14. Unité de roue (12) selon l'une quelconque des revendications précédentes, **caractérisée en ce que** le capteur (614) est disposé de manière décalée de la zone de balayage (616) dans la direction radiale par rapport à l'axe de rotation (114) ou **en ce que** le capteur (614) est disposé de manière décalée de la zone de balayage (616) dans la direction axiale par rapport à l'axe de rotation (114).

15. Unité de roue (12) selon l'une quelconque des revendications précédentes, **caractérisée en ce que** l'unité de roue (12) comporte un étrier de frein (204), dans laquelle l'étrier de frein (204) et le disque de frein (206) peuvent coopérer par freinage, **en ce que**, notamment, le capteur (614) est disposé sur l'étrier de frein (204).

16. Unité de roue (12) selon l'une quelconque des revendications précédentes, **caractérisée en ce que** l'unité de roue (12) comprend une suspension de roue (72), sur laquelle le moyeu (102) est monté mobile en rotation autour de l'axe de rotation (114), **en ce que**, notamment, le capteur (614) est disposé sur la suspension de roue (72).

17. Bicyclette (10) comprenant une unité de roue avant (12v) et une unité de roue arrière (12h), dans laquelle les unités de roues (12v, 12h) sont reliées à un cadre (14), **caractérisée en ce qu'**au moins une des unités de roues (12v, 12h) de la bicyclette (10) est réalisée selon l'une quelconque des revendications précédentes.
